# EUROPEAN PATENT APPLICATION

(11) **EP 4 694 561 A1**
(43) Date of publication of application: **11.02.2026**
(21) Application number: 24780649.0
(22) Date of filing: 28.03.2024
(51) Int. Cl.: H04W 76/20, H04W 28/06, H04W 76/15, H04W 84/12

(54) **COMMUNICATION CONTROL DEVICE**

(30) Priority: 31.03.2023 JP 2023059230
(71) Applicant: Sony Group Corporation, Tokyo 108-0075 (JP)
(72) Inventor: HIRATA Ryuichi, Tokyo 108-0075 (JP); SUGAYA Shigeru, Tokyo 108-0075 (JP)
(74) Representative: D Young & Co LLP
(86) International application number: PCT/JP2024/012675
(87) International publication number: WO 2024/204549

(57) **Abstract**

[Object] To reduce overhead upon changing a setting for a link.

[Solving Means] A communication control apparatus according to the present disclosure includes a control section that controls a plurality of wireless communication sections wirelessly connected to a wireless communication apparatus using respective links of a plurality of links for which respective settings have been performed, the control section performing control such that report information received by any of the plurality of wireless communication sections is acquired and such that a setting of a target link that is a portion of the plurality of links is changed from a current setting to a target setting, on the basis of the report information, the report information indicating a change applied to the current setting such that the setting of the target link is changed from the current setting to the target setting.

## Description

### Technical Field

The present disclosure relates to a communication control apparatus.

### Background Art

Wireless communication using a plurality of links (multi-link operation: MLO) is under discussion as a method used to meet a request for a high transmission speed for, for example, 8K transmission and cross reality (XR). The link is a wireless transmission line that enables data transmission performed between two communication apparatuses. When multi-link operation is performed, each link is selected from, for example, wireless transmission lines independent of each other and obtained by division by frequency domain. For example, a channel is used that is selected from channels included in any one of frequency bands such as a 2.4-GHz band, a 5-GHz band, a 6-GHz band, and a 920-MHz band.

In MLO, TID-to-link mapping is performed as control on quality of service (QoS), where what types of traffic can be transmitted and received using each link is set in advance in the TID-to-link mapping. A traffic identifier (TID) is an identifier used to identify the type of traffic, and currently there exist TID 0 to TID 7. In the TID-to-link mapping, through which link transmission and reception can be performed can be set for each of a downlink (DL) and an uplink (UL) with respect to each TID. When, for example, TID 0 is only mapped to a link 1 and is not mapped to other links, traffic for TID 0 is only transmitted and received using the link 1.

Note that a device that supports MLO is called a multi-link device (MLD). The MLD is a logical entity that includes at least one STA, and only includes one service access point (SAP) to an upper layer. The MLD of which each STA is an AP is referred to as an AP MLD, and the MLD of which each STA is a non-AP STA is referred to as a non-AP MLD. Each entity (an AP or a non-AP STA) in the MLD may be referred to as an AP affiliated with an AP MLD or a non-AP STA affiliated with a non-AP MLD, in order to indicate that the entity is an entity included in the MLD.

When assignment of a TID or a link is changed upon performing TID-to-link mapping, there is a need to perform, every time the assignment is changed, resetting by exchanging specific frames. Thus, overhead is increased, and it takes time to change temporary or instantaneous assignment. Further, a similar issue occurs when assignment of a link is changed during an enhanced multi-link single radio (EMLSR) operation or enhanced multi-link multi radio (EMLMR) operation that makes it possible to switch dynamic radio frequency (RF) chains on a portion of links in the MLD.

Non-Patent Literature 1 proposes an approach that enables an unmapped TID to be transmitted, with constraints imposed by a non-AP STA performing an EDCA operation on the basis of a multi-user (MU) enhanced distributed channel access (EDCA) parameter or an EPCS EDCA parameter. However, an operation based on the MU EDCA parameter is given a lower priority than an operation based on a normal EDCA parameter. Thus, a rate of acquiring a right to transmission is lower, compared to the case of other non-AP STAs. When it is difficult to acquire a right to transmission, it will take time to change assignment of a TID or a link.

### Citation List

### Non-Patent Literature

Non-Patent Literature 1: IEEE 802.11-21/1793r8

### Disclosure of Invention

### Technical Problem

It is an object of the present disclosure to reduce overhead upon changing a setting for a link. Solution to Problem

A communication control apparatus according to the present disclosure includes a control section that controls a plurality of wireless communication sections wirelessly connected to a wireless communication apparatus using respective links of a plurality of links for which respective settings have been performed, the control section performing control such that report information received by any of the plurality of wireless communication sections is acquired and such that a setting of a target link that is a portion of the plurality of links is changed from a current setting to a target setting, on the basis of the report information, the report information indicating a change applied to the current setting such that the setting of the target link is changed from the current setting to the target setting.

### Brief Description of Drawings

[Fig. 1] Fig. 1 illustrates an example of a configuration of a communication system according to the present embodiment.
[Fig. 2] Fig. 2 is a block diagram of an example of a communication apparatus that serves as an AP MLD according to the present embodiment.
[Fig. 3] Fig. 3 is a block diagram of an example of a communication apparatus that serves as a non-AP MLD according to the present embodiment.
[Fig. 4] Fig. 4 is a block diagram of an example of a communication apparatus that serves as the non-AP MLD supporting an EMLSR operation.
[Fig. 5] Fig. 5 is a block diagram of an example of a communication apparatus that serves as the non-AP MLD supporting an EMLMR operation.
[Fig. 6] Fig. 6 is a flowchart illustrating an example of an operation performed by the AP MLD.
[Fig. 7] Fig. 7 illustrates an example of a field that stores therein information used to report addition or exclusion of a TID with respect to a link.
[Fig. 8] Fig. 8 illustrates an example of a MAC frame.
[Fig. 9] Fig. 9 illustrates examples of Control ID subfield values extracted from IEEE 802.11be D3.0.
[Fig. 10] Fig. 10 illustrates an HLA Control subfield of HE variant and an HT Control Middle subfield of HT variant.
[Fig. 11] Fig. 11 is a flowchart illustrating an example of an operation performed by the non-AP MLD.
[Fig. 12] Fig. 12 is a flowchart illustrating another example of the operation performed by the non-AP MLD.
[Fig. 13] Fig. 13 illustrates an example of a format of a BlockAck frame that stores therein information regarding whether a request about mapping that is made by the non-AP MLD is to be accepted by the AP MLD.
[Fig. 14] Fig. 14 illustrates an example of a sequence used to temporarily change TID-to-link mapping in response to a report from the non-AP MLD.
[Fig. 15] Fig. 15 illustrates a sequence according to a modification of a first sequence example.
[Fig. 16] Fig. 16 illustrates an example of a sequence used to change assignment of a TID in response to a report from the AP MLD.
[Fig. 17] Fig. 17 illustrates an example of a sequence used to change an EMLSR link during the EMLSR operation.
[Fig. 18] Fig. 18 illustrates a sequence subsequent to the sequence illustrated in Fig. 17.
[Fig. 19] Fig. 19 illustrates an example of a sequence used to change an EMLMR link during the EMLMR operation.
[Fig. 20] Fig. 20 illustrates a sequence subsequent to the sequence illustrated in Fig. 19.
[Fig. 21] Fig. 21 is a diagram of a sequence used to describe a method for setting TID-to-link mapping according to the related technology.
[Fig. 22] Fig. 22 is a block diagram of an example of a configuration of hardware of a computer that performs a series of processes according to the present embodiment using a program.
[Fig. 23] Fig. 23 is a block diagram of an example of a schematic configuration of a smartphone to which the present embodiment is applied.
[Fig. 24] Fig. 24 is a block diagram of an example of a schematic configuration of an in-vehicle apparatus to which the present embodiment is applied.
[Fig. 25] Fig. 25 is a block diagram of an example of a schematic configuration of a wireless AP to which the present technology is applied.

### Mode(s) for Carrying Out the Invention

Embodiments of the present disclosure will now be described below with reference to the drawings. Note that, in the specification and the drawings, structural elements that have substantially the same functional configuration are denoted by the same reference numeral to omit a description thereof as appropriate. Illustrations in the figures are simplified ones, and, in addition to illustrated structural elements, a structural element necessary for implementation is provided as appropriate. Further, when terms such as "first" and "second" are used in the specification or in the claims, those do not indicate any orders or any degrees of importance but are used in order to distinguish a certain structural element from another structural element, unless otherwise specified.

### [Technical Background]

First, a method for setting TID-to-link mapping according to the related technology is described as a technical background of the present disclosure.

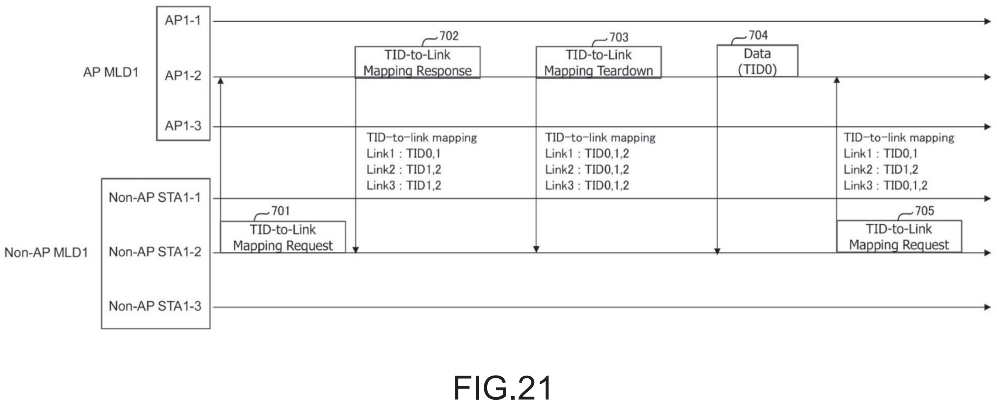

Fig. 21 is a diagram of a sequence used to describe a method for setting TID-to-link mapping according to the related technology. In this example, a non-AP MLD 1 that operates using three links (a link 1, a link 2, and a link 3) is wirelessly connected to an AP MLD 1 that also operates using the three links (the link 1, the link 2, and the link 3). In the AP MLD 1 and the non-AP MLD, entities that operate using the link 1 are respectively referred to as an AP 1-1 and a non-AP STA 1-1, entities that operate using the link 2 are respectively referred to as an AP 1-2 and a non-AP STA 1-2, and entities that operate using the link 3 are respectively referred to as an AP 1-3 and a non-AP STA 1-3. Further, there are traffic identifiers (TIDs) 0 to 7, but an example of mapping of TIDs 0, 1, and 2 is described in order to make the description simpler.

First, the non-AP MLD 1 transmits, using the link 2, a TID-to-Link Mapping Request frame 701 that includes a TID-to-link Mapping element that stores therein which of the links each TID is desired to be mapped to, and Direction (DL/UL) representing a direction in which communication is performed. Note that DL represents a downlink and that UL represents an uplink. In this example, it is assumed that the TID-to-link Mapping element includes a request to map TID 0 to the link 1, to map TID 1 to the links 1 to 3, and to map TID 2 to the links 2 and 3. Note that the TID-to-link mapping element may be included in an Association Request frame when a request for such mapping is made upon establishing connection with the AP MLD 1 and that the request for the mapping may be included in a Beacon frame or a Probe Response frame when the request is transmitted by the AP MLD.

When the AP MLD 1 having received the TID-to-Link Mapping Request frame 701 using the link 2 accepts TID-to-link mapping stored in a TID-to-link Mapping element, the AP MLD 1 transmits a TID-to-Link Mapping Response frame of which a status code is set to 0 (SUCCESS) and sets the inside of the MLD according to the TID-to-link mapping. When the AP MLD 1 does not accept the TID-to-link mapping, the AP MLD 1 transmits a TID-to-Link Mapping Response frame of which the status code is set to 133 (DENIED_TID_TO_LINK_MAPPING). Alternatively, the AP MLD 1 sets the status code to 134 (PREFERRED_TID_TO_LINK_MAPPING_SUGGESTED), and transmits a TID-to-Link Mapping Response frame that includes a TID-to-link mapping element that stores therein recommended TID-to-link mapping. The non-AP MLD receives information regarding the recommended TID-to-link mapping, and thereafter, when the non-AP MLD newly transmits a TID-to-Link Mapping Request frame, the non-AP MLD determines details of TID-to-link mapping again in consideration of the TID-to-link mapping recommended by the AP MLD 1. In the example in the figure, it is assumed that the AP MLD 1 determines that the TID-to-link mapping requested by the non-AP MLD 1 is to be accepted, and transmits, using the link 2, a TID-to-Link Mapping Response frame 702 of which the status code is set to 0 (SUCCESS).

Thereafter, the AP MLD 1 changes mapping of a TID to a link, in order to transmit data of TID 0 using the link 2. Specifically, the AP MLD 1 determines that mapping of a TID to a link is to be returned to default mapping. The default mapping is to map every TID to all of the links. The AP MLD 1 transmits, using the link 2, a TID-to-Link Mapping Teardown frame 703 indicating that the setting is to be returned to the default mapping.

After the AP MLD 1 transmits the TID-to-Link Mapping Response frame 702, the AP MLD 1 transmits data 704 of TID 0 using the link 2. Thereafter, the non-AP MLD 1 transmits, using the link 2, a TID-to-Link Mapping Request frame 705 used to make a request to map TID 0 to the links 1 and 3, to map TID 1 to the links 1 to 3, and to map TID 2 to the links 2 and 3.

When assignment of a TID or a link is changed, there is a need to perform, every time the assignment is changed, resetting for all of the links by exchanging specific frames such as TID-to-Link Mapping Request frames and TID-to-Link Mapping Response frames. Thus, overhead is increased, and it takes time to change temporary or instantaneous assignment. Further, a similar issue occurs when assignment of a link is changed during an enhanced multi-link single radio (EMLSR) operation or enhanced multi-link multi radio (EMLMR) operation that makes it possible to switch dynamic radio frequency (RF) chains on a portion of links in the MLD.

The present disclosure enables a temporary change in a setting of a portion of links with a smaller quantity of overhead. For example, it makes it possible to add or exclude a TID for a portion of links in a short period of time. This makes it possible to perform, with a simple procedure, setting to, for example, reduce transmission and reception of unnecessary traffic, and to transmit and receive a higher-priority traffic preferentially.

### [System Configuration]

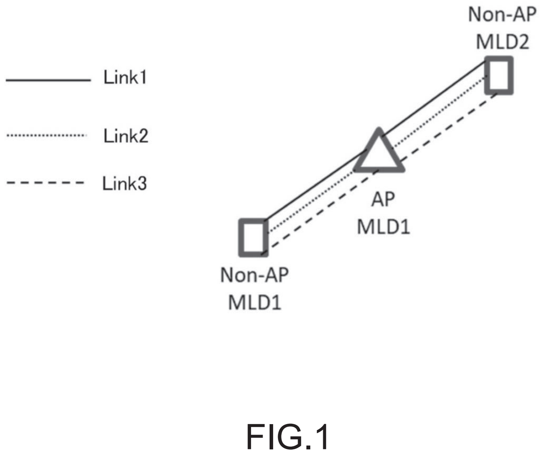

Fig. 1 illustrates an example of a configuration of a communication system according to the present embodiment. The communication system includes an AP MLD 1, a non-AP MLD 1, and a non-AP MLD 2. The AP MLD 1 is a communication apparatus that corresponds to a base station that supports multi-link operation (MLO). Each of the non-AP MLDs 1 and 2 (hereinafter referred to as a non-AP MLD 1/2) is a communication apparatus that corresponds to a terminal that supports MLO. The non-AP MLD 1/2 is connected to the AP MLD 1 wirelessly. In the figure, three types of lines (a solid line, a dashed line with a small pitch, and a dashed line with a large pitch) that each connect the AP MLD 1 and the non-AP MLD 1/2 indicate that different links (the links 1 to 3) each connect the AP MLD 1 and the non-AP MLD 1/2. Each of the links can be set for, for example, a type of data to be communicated, a direction (UL/DL) in which data of the data type can be communicated, and a period of time for which data of the data type can be communicated.

The three links used in the illustrated communication system are three channels selected from the same frequency band or three channels selected from different frequency bands. Further, the number of links used between the AP MLD 1 and the non-AP MLD 1/2 is not limited to three, and the number of links may be four or more, two, or one. Further, the number of non-AP MLDs connected to the AP MLD is not limited to two, and the number of non-AP MLDs may be one or three or more.

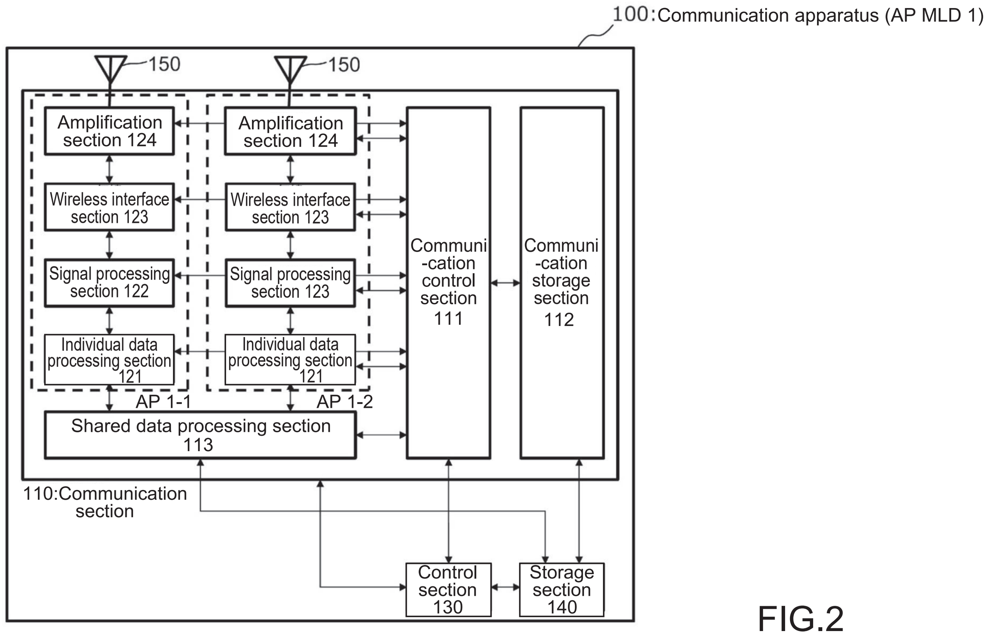

Fig. 2 is a block diagram of an example of a communication apparatus 100 that serves as the AP MLD 1 according to the present embodiment.

In the example illustrated in Fig. 2, the number of APs included in the AP MLD 1 is two, where APs 1-1 and 1-2 are included, in order to make the figure simpler. However, when three or more APs are included in the AP MLD 1, it is sufficient if APs 1-3 to 1-X (X is an integer greater than or equal to three) are added in parallel with the APs 1-1 and 1-2.

The communication apparatus 100 primarily includes a communication section 110, a control section 130, and a storage section 140. The communication section 110 includes a communication control section 111, a communication storage section 112, a shared data processing section 113, an AP 1-1, and an AP 1-2. The communication section 110 may be implemented by at least one LSI.

The APs 1-1 and 1-2 each include an individual data processing section 121, a signal processing section 122, a wireless interface section 123, an amplification section 124, and an antenna 150. In other words, a set of the individual data processing section 121, the signal processing section 122, the wireless interface section 123, the amplification section 124, and the antenna 150 is included in an AP that is a logical entity. At least two APs are structural elements of the communication apparatus 100. For example, the AP 1-1 performs processing related to the link 1 in the AP MLD 1, and the AP 1-2 performs processing related to the link 2 in the AP MLD 1. Each AP performs communication using a corresponding one of the links. The same applies to the case in which there are three or more APs. When, for example, the AP 1-3 exists, the AP 1-3 performs processing related to the link 3 in the AP MLD 1. The AP 1-1 corresponds to a first wireless communication section that performs communication related to the link 1 (first communication), and the AP 1-2 corresponds to a second wireless communication section that performs communication related to the link 2 (second communication). Note that the respective APs may perform processing related to the same link.

The communication control section 111 controls operations performed by the respective structural elements and information transmission performed between the structural elements. Further, the communication control section 111 performs control to deliver, to the shared data processing section 113 and each individual data processing section 121, control information and management information that are to be reported to another wireless communication apparatus. The communication control section 111 is also referred to as an MLD management entity.

The communication storage section 112 retains information used by the communication control section 111. The communication storage section 112 retains data to be transmitted to the non-AP MLD 1/2 and data received from the non-AP MLD 1/2.

At the time of transmission, the shared data processing section 113 performs sequence management of the data retained in the communication storage section 112 as well as the control information and management information that are received from the communication control section 111, and performs, for example, encryption processing to generate a data unit. Then, the shared data processing section 113 assigns the data unit to the respective individual data processing sections 121. At the time of reception, the shared data processing section 113 performs decryption processing and reorder processing on the data.

At the time of transmission, each individual data processing section 121 performs channel access operation on the basis of carrier sensing, adds a media access control (MAC) header and an error-detection code to the data unit to be transmitted, and performs processing of coupling a plurality of data units after the addition. At the time of reception, each individual data processing section 121 performs processing of decoupling a MAC header of the received data unit, performs analysis and error detection, and performs an operation of requesting retransmission. Note that each individual data processing section 121 performs operation necessary to perform communication in a single frequency band, and the shared data processing section 113 is linked to a plurality of individual data processing sections 121 to perform an in-common operation for communications performed in a plurality of frequency bands. Note that, in the present embodiment, the individual data processing section is also referred to as a lower MAC, and the shared data processing section is also referred to as an upper MAC or an MLD entity.

Each signal processing section 122 includes a transmission signal processing section and a reception signal processing section. At the time of transmission, the transmission signal processing section performs, for example, encoding, interleaving, and modulation on a data unit, and adds a physical header to generate a symbol stream. At this point, the transmission signal processing section may perform space separation processing for multi-input multi-output (MIMO). Note that, instead of performing the space separation processing, the transmission signal processing section may apply any amount of delay (hereinafter referred to as a cyclic shift delay (CSD)) for each antenna 150. At the time of reception, the reception signal processing section analyzes the physical header, and performs, for example, demodulation, deinterleaving, and decoding on the symbol stream to generate the data unit. Further, the reception signal processing section estimates complex channel characteristics and performs space separation processing as necessary. The signal processing section 122 is also referred to as a PHY section.

Each wireless interface section 123 includes a transmission wireless interface section and a reception wireless interface section. At the time of transmission, the transmission wireless interface section performs digital-to-analog signal conversion, filtering, up-conversion, and phase control on a symbol stream, and generates a transmission signal. At the time of reception, the reception wireless interface section performs down-conversion, filtering, and analog-to-digital signal conversion on a reception signal, and generates the symbol stream.

Each amplification section 124 includes a transmission amplification section and a reception amplification section. The transmission amplification section amplifies a signal input through the antenna 150. The transmission amplification section amplifies a signal input through the wireless interface section 123. A portion of the amplification section 124 may be a structural element external to the communication section 110. Further, a portion of the amplification section 124 may be included in the wireless interface section 123. A set of the wireless interface section and the amplification section is also referred to as an RF section or an RF chain. A set of the wireless interface section, the amplification section, and the antenna may be referred to as an RF chain.

The control section 130 controls the communication section 110 and the communication control section 111. Further, on behalf of the communication control section 111, the control section 130 may perform a portion of operations performed by the communication control section 111. Furthermore, the communication control section 111 and the control section 130 may be formed into a single block. For example, a control section of a communication control apparatus according to the present disclosure corresponds to the communication control section 111, or corresponds to at least one of the control section 130 or the communication control section 111. Further, for example, the communication control apparatus according to the present disclosure may include at least one of the communication control section 111 or the control section 130, and may further include other structural elements such as at least one of the AP 1-1 or the AP 1-2.

The storage section 140 retains information used by the control section 130 and the communication section 110. Further, on behalf of the communication storage section 112, the storage section 140 may perform a portion of operations performed by the communication storage section 112. The storage section 140 and the communication storage section 112 may be formed into a single block.

A plurality of sets of the individual data processing section 121 and the signal processing section 122 may be connected to one wireless interface section 123.

Further, a plurality of sets of the wireless interface section 123, the amplification section 124, and the antenna 150 may be connected to one signal processing section 122.

In Fig. 2, the number of APs is two. However, the number of APs may be three or more, as described above. In this case, a portion of a plurality of APs may share one antenna through a frequency division section.

In the configuration described above, particularly, the communication control section 111 in the present embodiment controls each structural element such that addition or exclusion is performed temporarily with respect to assignment of a data type to a link, on the basis of information (communication environment information) regarding a communication state of each data type used upon communication with the non-AP MLD 1/2. The data type is a TID in the present embodiment. However, the data type is not limited to the TID, and the data type may be an access category (AC), or any item that represents the data type according to applied wireless communication standards.

Addition or exclusion with respect to assignment of a TID to a link is determined on the side of the non-AP MLD 1/2 in addition to being determined on the side of the AP MLD 1. When the addition or exclusion is determined on the side of the AP MLD 1, the communication control section 111 generates report information regarding a change in a setting of a portion of a plurality of links (a target link). More specifically, the report information is information indicating a change applied to a current setting of a target link such that a setting of the target link is changed from the current setting to a target setting, the target link being a portion of a plurality of links. The report information may be information indicating a change applied to a current setting of only a portion of target links. The communication control section 111 controls each structural element such that the generated report information is transmitted from any AP (a wireless communication section) to the non-AP MLD 1/2 and such that a setting of a target link in the communication apparatus of the communication control section 111 is changed from a current setting to a target setting. In this case, the report information is stored in a header of a frame, and data destined for the non-AP MLD is stored in a body field of the frame. This makes it possible to transmit data concurrently with transmission of the report information, and thus to reduce overhead involved in reporting a change in setting. Further, it is sufficient if a change is reported for only information regarding a change-target link. Thus, the report information can be made smaller in size, and thus overhead on the target link can also be reduced from this perspective.

On the other hand, when addition or exclusion with respect to assignment of a TID to a link is determined on the side of the non-AP MLD 1/2, the communication control section 111 controls each structural element such that report information transmitted by the non-AP MLD 1/2 and received by any of the APs is acquired and such that a setting of a target link in the communication apparatus of the communication control section 111 is changed from a current setting to a target setting on the basis of the acquired report information.

In addition to the addition or exclusion with respect to assignment of a TID to a target link, the setting of a target link may further include at least one of a setting of a period of time for which addition or exclusion with respect to assignment of a TID is effective (that is, a period of time for which data can be communicated according to a result of assignment), or a setting of a direction (an uplink (UL) or a downlink (DL)) in which communication can be performed according to a result of assignment. The UL direction is a direction in which data is transmitted from the non-AP MLD 1/2 to the AP MLD 1 (that is, a direction in which the AP MLD 1 receives data from the non-AP MLD 1/2). The DL direction is a direction in which data is received by the non-AP MLD 1/2 from the AP MLD 1 (that is, a direction in which the AP MLD 1 transmits data to the non-AP MLD 1/2).

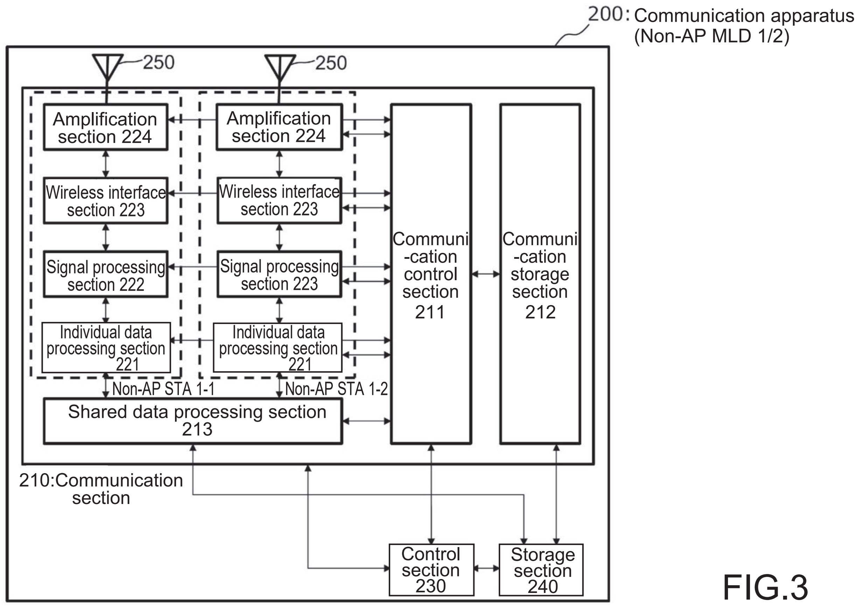

Fig. 3 is a block diagram of an example of a communication apparatus 200 that serves as the non-AP MLD 1/2 according to the present embodiment.

In the example illustrated in Fig. 3, the number of non-AP STAs included in the non-AP MLD 1/2 is two, where non-AP STAs 1-1 and 1-2 are included, in order to make the figure simpler. However, when three or more non-AP STAs are included in the non-AP MLD 1/2, it is sufficient if non-AP STAs 1-3 to 1-X (X is an integer greater than or equal to three) are added in parallel with the non-AP STAs 1-1 and 1-2.

The communication apparatus 200 serving as the non-AP MLD 1/2 primarily includes a communication section 210, a control section 230, and a storage section 240. The communication section 210 includes a communication control section 211, a communication storage section 212, a shared data processing section 213, a non-AP STA 1-1, and a non-AP STA 1-2. The communication section 210 may be implemented by at least one LSI.

The non-AP STAs 1-1 and 1-2 each include an individual data processing section 221, a signal processing section 222, a wireless interface section 223, an amplification section 224, and an antenna 250. In other words, a set of the individual data processing section 221, the signal processing section 222, the wireless interface section 223, the amplification section 224, and the antenna 250 is included in a non-AP STA that is a logical entity. At least two non-AP STAs are structural elements of the communication apparatus 100. For example, the non-AP STA 1-1 performs processing related to the link 1 in the non-AP MLD 1/2, and the non-AP STA 1-2 performs processing related to the link 2 in the non-AP MLD 1. Each non-AP STA performs communication using a corresponding one of the links. The same applies to the case in which there are three or more non-AP STAs. When, for example, the non-AP STA 1-3 exists, the non-AP STA 1-3 performs processing related to the link 3 in the non-AP MLD 1/2. The non-AP STA 1-1 corresponds to a first wireless communication section that performs communication related to the link 1 (first communication), and the non-AP STA 1-2 corresponds to a second wireless communication section that performs communication related to the link 2 (second communication). Note that the respective non-AP STAs may perform processing related to the same link.

The communication control section 211 controls operations performed by the respective structural elements and information transmission performed between the structural elements. Further, the communication control section 211 performs control to deliver, to the shared data processing section 213 and each individual data processing section 221, control information and management information that are to be reported to another wireless communication apparatus. The communication control section 211 is also referred to as an MLD management entity.

The communication storage section 212 retains information used by the communication control section 211. The communication storage section 212 retains data to be transmitted to the AP MLD 1 and data received from the AP MLD 1.

At the time of transmission, the shared data processing section 213 performs sequence management of the data retained in the communication storage section 212 as well as the control information and management information that are received from the communication control section 211, and performs, for example, encryption processing to generate a data unit. Then, the shared data processing section 213 assigns the data unit to the respective individual data processing sections 221. At the time of reception, the shared data processing section 213 performs decryption processing and reorder processing on the data.

At the time of transmission, each individual data processing section 221 performs channel access operation on the basis of carrier sensing, adds a media access control (MAC) header and an error-detection code to the data unit to be transmitted, and performs processing of coupling a plurality of data units after the addition. At the time of reception, each individual data processing section 221 performs processing of decoupling a MAC header of the received data unit, performs analysis and error detection, and performs an operation of requesting retransmission. Note that each individual data processing section 221 performs operation necessary to perform communication in a single frequency band, and the shared data processing section 213 is linked to a plurality of individual data processing sections 221 to perform an in-common operation for communications performed in a plurality of frequency bands. Note that, in the present embodiment, the individual data processing section is also referred to as a lower MAC, and the shared data processing section is also referred to as an upper MAC or an MLD entity.

Each signal processing section 222 includes a transmission signal processing section and a reception signal processing section. At the time of transmission, the transmission signal processing section performs, for example, encoding, interleaving, and modulation on a data unit, and adds a physical header to generate a symbol stream. At this point, the transmission signal processing section may perform space separation processing for multi-input multi-output (MIMO). Note that, instead of performing the space separation processing, the transmission signal processing section may apply any amount of delay (hereinafter referred to as a cyclic shift delay (CSD)) for each antenna 250. At the time of reception, the reception signal processing section analyzes the physical header, and performs, for example, demodulation, deinterleaving, and decoding on the symbol stream to generate the data unit. Further, the reception signal processing section estimates complex channel characteristics and performs space separation processing as necessary. The signal processing section 222 is also referred to as a PHY section.

Each wireless interface section 223 includes a transmission wireless interface section and a reception wireless interface section. At the time of transmission, the transmission wireless interface section performs digital-to-analog signal conversion, filtering, up-conversion, and phase control on a symbol stream, and generates a transmission signal. At the time of reception, the reception wireless interface section performs down-conversion, filtering, and analog-to-digital signal conversion on a reception signal, and generates the symbol stream.

Each amplification section 224 includes a transmission amplification section and a reception amplification section. The transmission amplification section amplifies a signal input through the antenna 250. The transmission amplification section amplifies a signal input through the wireless interface section 223. A portion of the amplification section 224 may be a structural element external to the communication section 210. Further, a portion of the amplification section 224 may be included in the wireless interface section 223. A set of the wireless interface section and the amplification section is also referred to as an RF section or an RF chain. A set of the wireless interface section, the amplification section, and the antenna may be referred to as an RF chain.

The control section 230 controls the communication section 210 and the communication control section 211. Further, on behalf of the communication control section 211, the control section 230 may perform a portion of operations performed by the communication control section 211. Furthermore, the communication control section 211 and the control section 230 may be formed into a single block. For example, a control section of a communication control apparatus according to the present disclosure corresponds to the communication control section 211, or corresponds to at least one of the control section 230 or the communication control section 211. Further, for example, the communication control apparatus according to the present disclosure may include at least one of the communication control section 211 or the control section 230, and may further include other structural elements such as at least one of the non-AP STA 1-1 or the non-AP STA 1-2.

The storage section 240 retains information used by the control section 230 and the communication section 210. Further, on behalf of the communication storage section 212, the storage section 240 may perform a portion of operations performed by the communication storage section 212. The storage section 240 and the communication storage section 212 may be formed into a single block.

A plurality of sets of the individual data processing section 221 and the signal processing section 222 may be connected to one wireless interface section 223. Further, a plurality of sets of the wireless interface section 223, the amplification section 224, and the antenna 250 may be connected to one signal processing section 222.

In Fig. 3, the number of non-AP STAs is two. However, the number of non-AP STAs may be three or more, as described above. In this case, a portion of a plurality of non-AP STAs may share one antenna through a frequency division section.

In the configuration described above, particularly, the communication control section 211 in the present embodiment controls each structural element such that addition or exclusion is performed temporarily with respect to assignment of a data type to a link, on the basis of information (communication environment information) regarding a communication state of each data type used upon communication with the AP MLD 1. The data type is a TID in the present embodiment. However, the data type is not limited to the TID, and the data type may be an access category (AC), or any item that represents the data type according to applied wireless communication standards.

Addition or exclusion with respect to assignment of a TID to a link is determined on the side of the AP MLD 1 in addition to being determined on the side of the non-AP STA 1/2. When the addition or exclusion is determined on the side of the non-AP STA 1/2, the communication control section 211 generates report information regarding a change in a setting of a portion of a plurality of links (a target link). More specifically, the report information is information indicating a change applied to a current setting of a target link such that a setting of the target link is changed from the current setting to a target setting, the target link being a portion of a plurality of links. The report information may be information indicating a change applied to a current setting of only a portion of target links. The communication control section 211 transmits the generated report information to the AP MLD 1 using any non-AP STA (a wireless communication section). When a confirmation response to the report information is received, the communication control section 211 controls each structural element such that a setting of a target link is changed from a current setting to a target setting. When the AP MLD 1 includes, in the confirmation response, information indicating whether a change in setting is to be accepted by the AP MLD 1 and only when the information included in the confirmation response indicates permission for the acceptance, the communication control section 211 may perform control such that a setting of a target link is changed from a current setting to a target setting. When the information included in the confirmation response indicates a denial of the acceptance and when information indicating a change to a different setting that is recommended by the AP MLD 1, the setting may be changed according to the information. When the report information is stored in a header of a frame and data destined for the non-AP MLD is stored in a body field of the frame, the report information is acquired from the header, and the data is acquired from the body field. This makes it possible to acquire data concurrently with acquisition of the report information, and thus to transmit the report information efficiently. Further, it is sufficient if the report information only includes information regarding a change-target link. Thus, the report information can be made smaller in size, and thus effectiveness can also be provided from this perspective.

When addition or exclusion with respect to assignment of a TID to a link is determined on the side of the AP MLD 1, the communication control section 111 controls each structural element such that report information transmitted by the AP MLD 1 and received by any of the non-AP STAs is acquired and such that a setting of a target link in the communication apparatus of the communication control section 111 is changed on the basis of the acquired report information.

In addition to the addition or exclusion with respect to assignment of a TID to a target link, the setting of a target link may further include at least one of a setting of a period of time for which addition or exclusion with respect to assignment of a TID is effective (that is, a period of time for which data can be communicated according to a result of assignment), or a setting of a direction (an uplink (UL) or a downlink (DL)) in which communication can be performed according to a result of assignment. The UL direction is a direction from the non-AP MLD 1/2 to the AP MLD 1, and the DL direction is a direction from the AP MLD 1 to the non-AP MLD 1/2.

An example of a configuration of a communication apparatus that supports an enhanced multi-link single radio (EMLSR) operation and an example of a configuration of a communication apparatus that supports an enhanced multi-link multi radio (EMLMR) operation that are other examples of the configuration of the non-AP MLD 1/2 are described below.

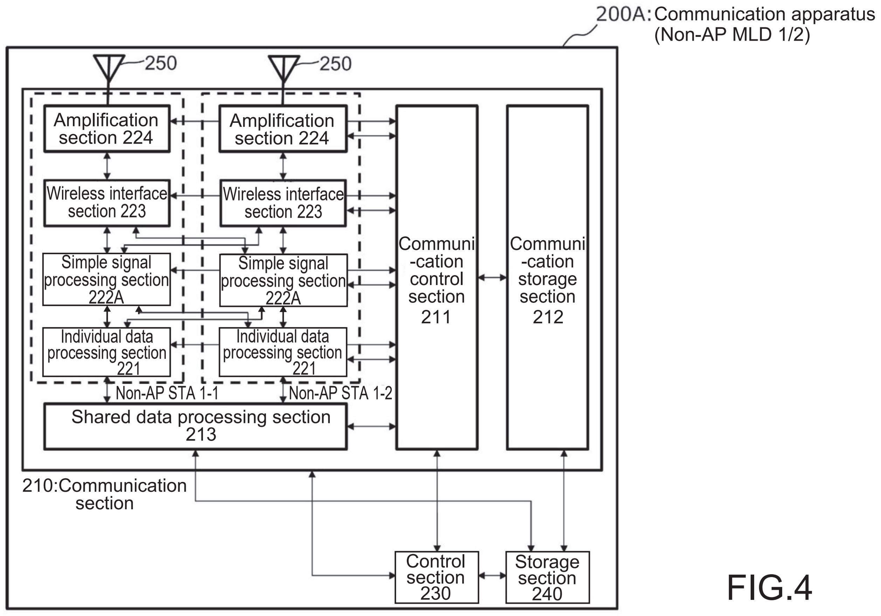

Fig. 4 is a block diagram of an example of a communication apparatus 200A that serves as the non-AP MLD 1/2 supporting the EMLSR operation. The description is made focused on a difference from the configuration illustrated in Fig. 3 described above. The EMLSR operation is an operation performed by an AP MLD and a non-AP MLD that includes a plurality of RF chains but can only perform communication using one link at a time. During the EMLSR operation, the non-AP MLD operates each RF chain for a corresponding one of a plurality of links (EMLSR links), and waits for a trigger frame from an AP (such as an MU-RTS frame). When a trigger frame from an AP is received using a certain link, the settings of RF chains operated using respective links are changed such that the RF chains are operated using the certain link on which the trigger frame has been received. This enables transmission and reception by a plurality of streams using the certain link (spatial multiplexing communication). The link by use of which a trigger frame can be received corresponds to an EMLSR link.

The signal processing section 222 illustrated in Fig. 3 has been changed to a simple signal processing section 222A. Details of processing performed by the simple signal processing section 222A is similar to those of the processing performed by the signal processing section 222. However, a frame format that can be processed by the simple signal processing section 222A and a modulation scheme of the simple signal processing section 222A are portions of a frame format and a modulation scheme that are supported by the signal processing section 222. Note that the simple signal processing section 222A may be referred to as a simple PHY section.

Further, a switch is provided between the wireless interface section 223 and the simple signal processing section 222A. This makes it possible to switch a connection destination of the simple signal processing section 222A between the wireless interface section 223 of the non-AP STA 1-1 and the wireless interface section 223 of the non-AP STA 1-2. Likewise, this makes it possible to switch a connection destination of the wireless interface section 223 between the simple signal processing section 222A of the non-AP STA 1-1 and the simple signal processing section 222A of the non-AP STA 1-2.

Furthermore, a switch is provided between the simple signal processing section 222A and the individual data processing section 221. This makes it possible to switch a connection destination of the individual data processing section 221 between the simple signal processing section 222A of the non-AP STA 1-1 and the simple signal processing section 222A of the non-AP STA 1-2. Likewise, this makes it possible to switch a connection destination of the simple signal processing section 222A between the individual data processing section 221 of the non-AP STA 1-1 and the individual data processing section 221 of the non-AP STA 1-2.

In the present embodiment, when the report information (here, information used to report addition or exclusion of a TID with respect to a link) described when the configuration of the non-AP MLD 1/2 illustrated in Fig. 3 is described, is received from the AP MLD 1 during performing the EMLSR operation, and when there is no TID indicated by the report information (such as when TID 8 is specified), particularly, the communication control section 211 deals with the report information as information regarding an instruction on a change in EMLSR link, and performs control such that a target link indicated by the report information is added as the EMLSR link or excluded. Accordingly, the EMLSR link can be changed using a format (for example, a field, in the frame, that stores therein report information), and thus there is no need to newly provide a format or field used to change the EMLSR link. Further, when the report information is stored in a header of a frame and data destined for the non-AP MLD is stored in a body field of the frame, the report information is acquired from the header, and the data is acquired from the body field. This makes it possible to acquire data concurrently with acquisition of the report information, and thus to transmit the report information efficiently (to change the EMLMR link efficiently).

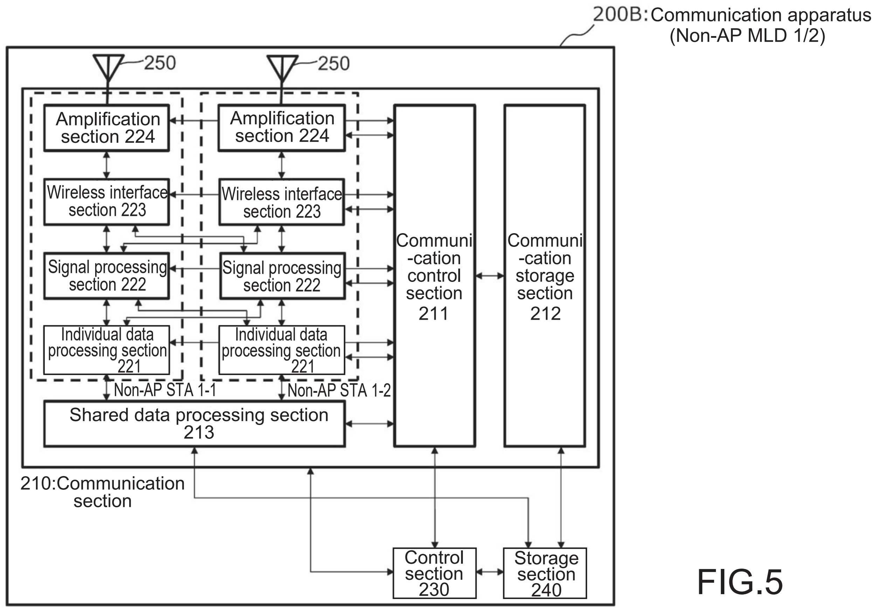

Fig. 5 is a block diagram of an example of a communication apparatus 200B that serves as the non-AP MLD 1/2 supporting the EMLMR operation.

The EMLMR operation is an operation performed by an AP MLD and a non-AP MLD that includes a plurality of RF chains and can perform transmission and reception using a plurality of links. During the EMLMR operation, the non-AP MLD operates at least one RF chain for each one of a plurality of links (EMLMR links), and waits for a data frame from an AP. When a data frame from an AP is received using a certain link, the settings of RF chains operated using respective links are changed such that the RF chains are operated using the certain link on which the data frame has been received. This enables transmission and reception by a number of streams using the certain link (spatial multiplexing communication).

The configuration of the communication apparatus 200B illustrated in Fig. 5 is essentially similar to the configuration illustrated in Fig. 3 described above. However, as in the case of the non-AP MLD 1/2 supporting the EMLSR operation illustrated in Fig. 4, a switch is provided between the wireless interface section 223 and the signal processing section 222, and a switch is provided between the signal processing section 222 and the individual data processing section 221. Switching performed using the switches makes it possible to switch each of a connection destination of the wireless interface section 223, a connection destination of the signal processing section 222, and a connection destination of the individual data processing section 221 between the non-AP STA 1-1 and the non-AP STA 1-2. With respect to the simple signal processing section 222A of the non-AP MLD 1/2 supporting the EMLSR operation illustrated in Fig. 4 described above, the frame format that can be processed by the simple signal processing section 222A and the modulation scheme of the simple signal processing section 222A are limited. However, there is not such a limitation on the signal processing section 222 illustrated in Fig. 5, as in the case of the configuration illustrated in Fig. 3.

In the present embodiment, when the report information (here, information used to report addition or exclusion of a TID with respect to a link) described when the configuration of the non-AP MLD 1/2 illustrated in Fig. 3 is described, is received from the AP MLD 1 during performing the EMLMR operation, and when there is no TID indicated by the report information (such as when TID 8 is specified), particularly, the communication control section 211 deals with the report information as information regarding an instruction on a change in EMLMR link, and performs control such that a target link indicated by the report information is added as the EMLMR link or excluded. Accordingly, the EMLMR link can be changed using a format (for example, a field, in the frame, that stores therein report information), and thus there is no need to newly provide a format or field used to change the EMLMR link. Further, when the report information is stored in a header of a frame and data destined for the non-AP MLD is stored in a body field of the frame, the report information is acquired from the header, and the data is acquired from the body field. This makes it possible to acquire data concurrently with acquisition of the report information, and thus to transmit the report information efficiently (to change the EMLMR link efficiently).

### [Operation Performed by AP MLD 1]

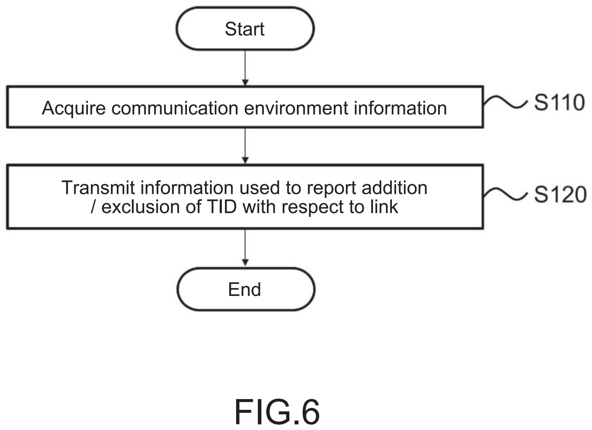

Fig. 6 is a flowchart illustrating an example of an operation performed by the AP MLD 1. This operation is performed under the control of the communication control section 111.

The communication control section 111 acquires communication environment information regarding a communication environment of the AP MLD 1 on the basis of a state of communication with, for example, the non-AP MLD 1/2 (S110).

Examples of the communication environment information include the number of non-AP STAs connected using each link (the links 1 to 3). Further, the examples of the communication environment information include a state of transmission and reception of each TID using each link. Examples of the state of transmission and reception include a traffic volume for a specified period of time in the past and a traffic volume per unit of time. The traffic volume may be a data volume, the number of frames, or statistics (such as an average or a variance) based on at least one of the data volume or the number of frames.

The communication control section 111 determines a non-AP MLD for which mapping of a TID to a link is to be changed, determines details of the change in the mapping, and transmits, to the determined non-AP MLD and via the communication section 110, report information indicating at least one of addition or exclusion of a TID with respect to a link (S120).

The report information includes at least one of information regarding a link to which mapping is to be changed, information regarding a TID of which mapping is to be changed, information regarding a direction in which mapping is to be changed, or information regarding a period of time for which mapping is to be changed. The respective pieces of information are described below. Note that configurations of frames or fields used to report the pieces of information will be separately described later.

### [Information Regarding Link to Which Mapping is to be Changed]

This information is a link ID to which mapping is to be changed. The link ID may be a single link ID or a plurality of link IDs. A link ID bitmap may be used for a method for reporting a plurality of link IDs at a time. The link ID may be information (Link ID) regarding an EMLSR link or EMLMR link used to perform an EML operation.

### [Information Regarding TID of Which Mapping is to be Changed]

This information is information used to specify a TID of which mapping is to be changed. The information may be a single TID or a plurality of TIDs. A TID bitmap may be used for a method for reporting a plurality of TIDs at a time.

A TID stored in a QoS Control field may be used as a TID for which a change in mapping is to be requested. A value (such as TID = 8) that is not defined as a TID may be stored in the QoS Control field. This value may be used as information used to report a change in EMLSR link during the EMLSR operation or may be used as information used to report a change in EMLMR link during the EMLMR operation.

When a TID is excluded from being mapped to a link, an instruction to exclude from being mapped may be given by reporting sets of mapped TID and link. This makes it possible to exclude unnecessary mapping of a TID to a link without providing a new field used for the exclusion. Note that a field used for exclusion may be provided separately, and a set of a TID and a link that is to be excluded may be specified using the field.

### [Information Regarding Direction in Which Mapping is to be Changed]

This information regarding a direction indicates to which of UL or DL a set of a link and a TID is applied, where the link and the TID are respectively specified by the above-described information regarding a link to which mapping is to be changed and the above-described information regarding a TID of which mapping is to be changed. Note that, when the direction is not specified, both UL and DL may be considered to be specified implicitly, with the information regarding a direction being used as an option.

### [Information Regarding Period of Time for Which Mapping is to be Changed]

The information regarding a period of time for which mapping is to be changed is information indicating a period of time for which details of the change that are specified by a set of the link, TID, and direction described above are effective (a period of time for which data specified by a set of the link, the TID, and the direction can be communicated). The period of time for which mapping is to be changed may be specified by, for example, a length of a period of time starting from an end of a frame used to report the change. In this case, for example, the length of the period of time may be specified per time unit (TU). As another method, the period of time may be specified using a start time and a finish time. The start time and the finish time may be times obtained with start of a beacon interval being used as a reference.

Further, a value of a parameter other than the parameters described above may be changed for the period of time for which mapping is to be changed. In this case, there is an enhanced distributed channel access (EDCA) parameter or a max PPDU length. Note that PPDU is an abbreviation of a physical layer (PHY) protocol data unit.

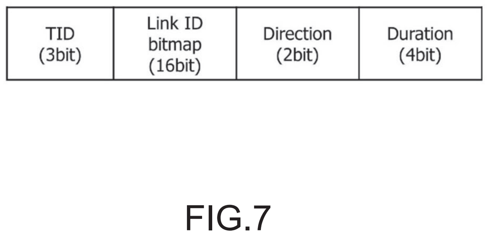

Fig. 7 illustrates an example of a format of a field that stores therein information (report information) indicating addition or exclusion of a TID with respect to a link. Fig. 7 illustrates an example in which this field is implemented using an A-Control field in an HT control field. The field illustrated in Fig. 7 is herein referred to as a Link mapping change subfield. The link mapping change subfield includes TID, Link ID bitmap, Direction, and Duration. Note that the numbers of bits in the figure are examples and are not limited to the numbers of bits in this example.

The TID field stores therein a TID of which mapping is to be changed.

The Link ID bitmap field stores therein a bitmap that includes information regarding a link to which assignment of a TID stored in the TID field is to be changed. Each bit in the bitmap corresponds to a link. The assignment is to be changed when a bit that corresponds to a link is "1", and the assignment is not to be changed when the bit corresponding to the link is "0." Instead of the Link ID bitmap field, a field used to only change assignment to a single link may be provided. For example, a link ID (4 bits) field that stores therein a single link ID may be used.

The Direction field stores therein information that indicates an orientation of traffic for which assignment of a TID is to be changed. For example, "0" represents DL, "1" represents UL, and "2" represents both DL and UL.

The Duration filed stores therein information regarding a period of time for which addition or exclusion of a TID with respect to a link is effective. For example, a value that represents a period of time is stored per time unit (TU).

As described above, exclusion of a TID is reported by specifying a set of assigned TID and link ID or a set of assigned TID, link ID, and direction in the fields described above.

In the example of the format illustrated in Fig. 7, only one change-target TID can be specified. However, modification may be made such that a plurality of TIDs can be specified. For example, the TID fields illustrated in Fig. 7 of which the number is the same as the number of change-target TIDs may be arranged. Alternatively, the TID field illustrated in Fig. 7 may be expanded such that a plurality of TIDs can be stored, and the fields of Link ID bitmap, Direction, and Duration may also be expanded such that information for each TID can be stored.

A method for creating the Link mapping change subfield is described using the A-Control field in the HT Control field.

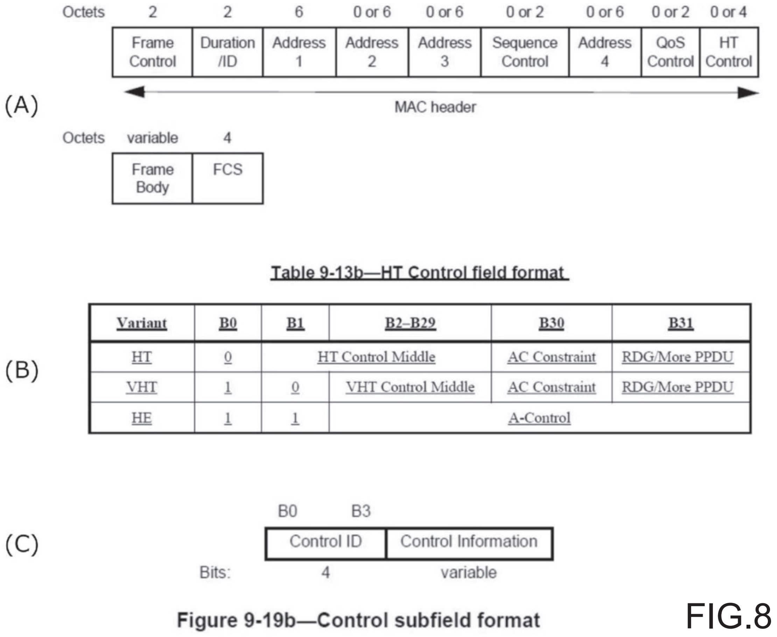

(A) of Fig. 8 illustrates an example of a MAC frame. (B) of Fig. 8 illustrates an example of a HT Control field format extracted from the specifications of IEEE 802.11. As illustrated in (B) of Fig. 8, the HT Control field is dealt with as an A-Control field, with the 0th and 1st bits (B0 and B1) of the HT Control field in a MAC header each being set to "1". The A-Control field includes at least one Control subfield.

(C) of Fig. 8 illustrates an example of a Control subfield extracted from the specifications of IEEE 802.11. A control ID can be specified by B0 to B3 of each Control subfield.

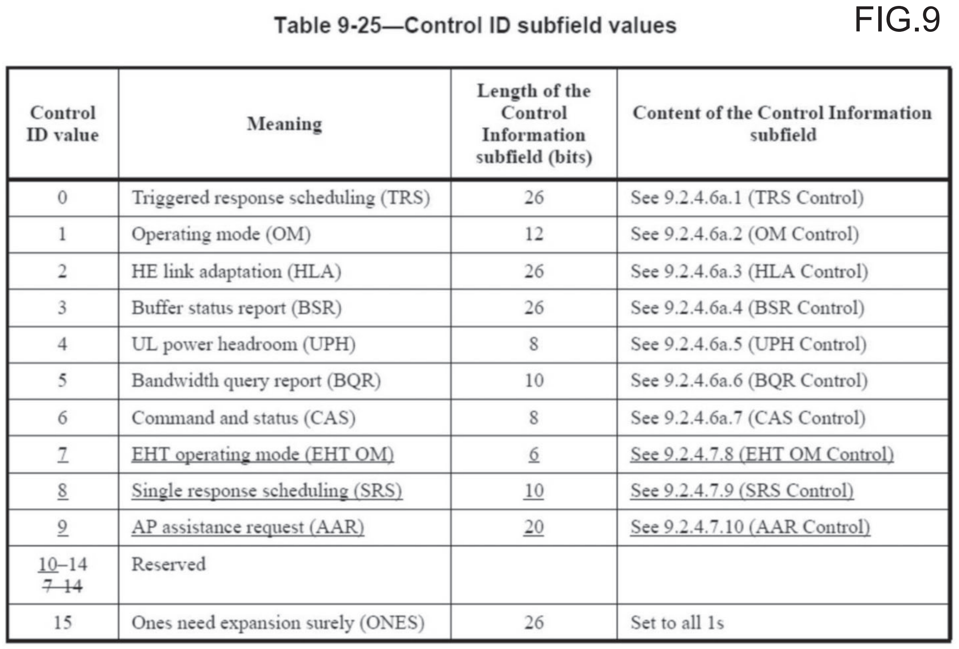

Fig. 9 illustrates examples of Control ID subfield values extracted from IEEE 802.11be D3.0. The type and a length of Control information are defined for each control ID. In the present embodiment, it is assumed that pieces of new Control information are defined in the form of Link mapping change subfields with respect to Control ID 10 and subsequent Control IDs, which are assigned "Reserved".

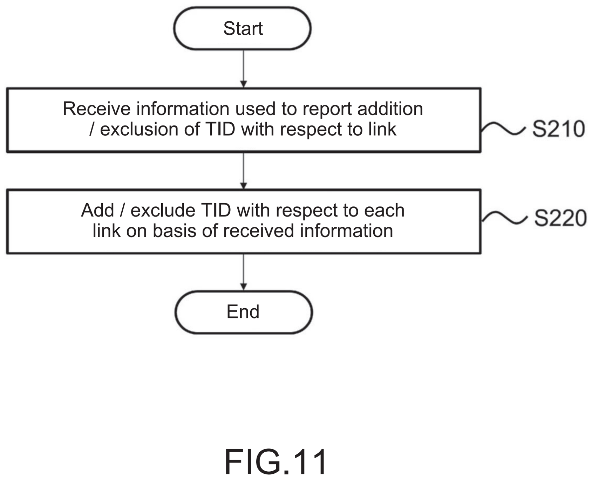

Note that the method for reporting addition or exclusion of a TID with respect to a link is not limited to a method using the A-Control field described above. For example, a frame used to report addition or exclusion of a TID with respect to a link may be newly defined, or a new subelement or element may be defined. Information regarding "Link mapping change" may be defined in the form of a dedicated frame. Further, an existing Control subfield included in an HT-Control field may be used. This will be described with reference to Fig. 11.

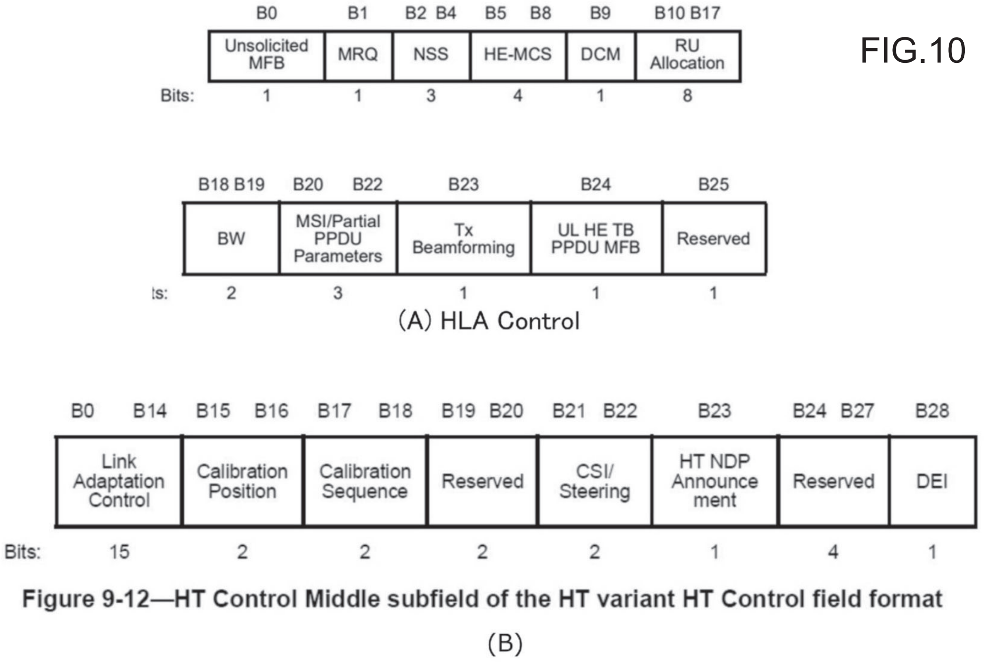

(A) of Fig. 10 illustrates an HLA Control subfield of HE variant. Link ID may be stored in HE-MCS, Direction may be stored in BW, and TID stored in a QoS Control field may be a change-target TID.

(B) of Fig. 10 illustrates a Control Middle subfield of HT variant. Link ID may be stored in Reserved (4 bits), Direction may be stored in Reserved (2 bits), and TID stored in the QoS Control field may be a change-target TID.

### [First Example of Operation Performed by Non-AP MLD 1/2]

Fig. 11 is a flowchart illustrating an example of an operation performed by the non-AP MLD 1/2. This operation is performed under the control of the communication control section 211.

The communication control section 211 acquires, through the communication section 210, report information transmitted from the AP MLD 1, the report information indicating at least one of addition of a TID or exclusion of the TID with respect to a link (S210).

The report information includes at least one of information regarding a link to which mapping is to be changed, information regarding a TID of which mapping is to be changed, information regarding a direction for which mapping is to be changed, or information regarding a period of time for which mapping is to be changed. Details of these pieces of information are similar to those described above. Thus, descriptions thereof are omitted.

The communication control section 211 assigns a TID to a set of a link and UP/DL that is indicated by the report information (S220). For example, when a set of a link ID and a TID that is unmapped to the link ID is indicated, the TID is mapped to a link. When a set of a link ID and a TID that is already mapped to the link ID is indicated, mapping of the TID to a link is canceled.

### [Second Example of Operation Performed by Non-AP MLD 1/2]

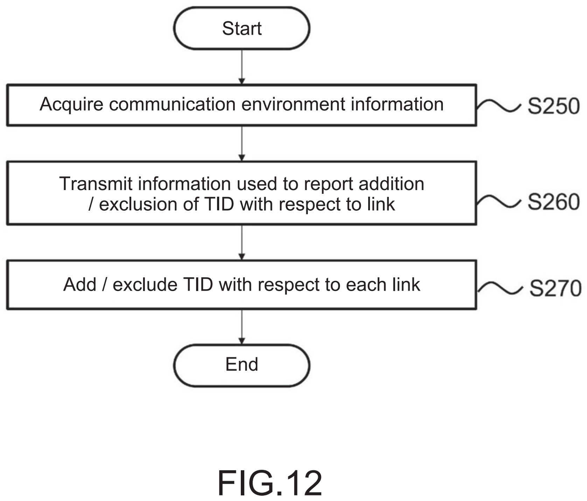

Fig. 12 is a flowchart illustrating another example of the operation performed by the non-AP MLD 1/2. This operation is performed under the control of the communication control section 211.

The communication control section 211 acquires communication environment information on the basis of a state of communication with the AP MLD 1 (S250). Examples of the communication environment information include a state of transmission and reception of each TID using each link in the communication apparatus of the communication control section 211. Examples of the state of transmission and reception include a traffic volume for a specified period of time in the past and a traffic volume per unit of time. The traffic volume may be a data volume, the number of frames, or statistics (such as an average or a variance) based on at least one of the data volume or the number of frames. Further, the traffic volume may a data volume for each TID stored in a buffer used for transmission.

On the basis of the communication environment information, the communication control section 211 determines that mapping of a TID to a link is to be changed, and transmits report information to the AP MLD 1 through the communication section 210, the report information being used to make a request for at least one of addition of a TID or exclusion of a TID with respect to a link (S260). Examples of the report information are similar to those described above.

When the communication control section 211 receives, from the AP MLD 1, a confirmation response (such as BlockAck or ACK) to the report information, the communication control section 211 assigns a TID to a set of a link and UP/DL that is requested using the report information (S270).

Thereafter, the communication control section 211 performs control such that data communication with the AP MLD 1 is performed using a link to which a TID is assigned, according to UL/DL to which the TID is assigned. When, for example, TID 1 is assigned to UL, the AP MLD 1/2 transmits data of TID 1 using the assigned link. When TID 1 is assigned to DL, the AP MLD 1/2 receives data of TID 1 that is transmitted by the AP MLD 1 using the assigned link.

When the AP MLD 1 transmits a confirmation response, the AP MLD 1 may determine whether to accept mapping requested by the non-AP MLD 1/2, and may store information indicating a result of the determination in the confirmation response, which is an operation that is performed by the AP MLD 1 and that corresponds to the operation performed by non-AP MLD 1/2 in Step S270 described above. The determination may be performed on the basis of, for example, communication environment information. Alternatively, the AP MLD 1 may determine that mapping requested by the non-AP MLD 1/2 is to be accepted unconditionally. When the AP MLD 1 denies the request, the AP MLD 1 may store, in the confirmation response, information (recommended information) indicating a change to another setting, where the change to the other setting replaces a change in setting that is indicated by report information. When the denial of the request is reported to the non-AP MLD 1/2, the non-AP MLD 1/2 may set a link according to the recommended information.

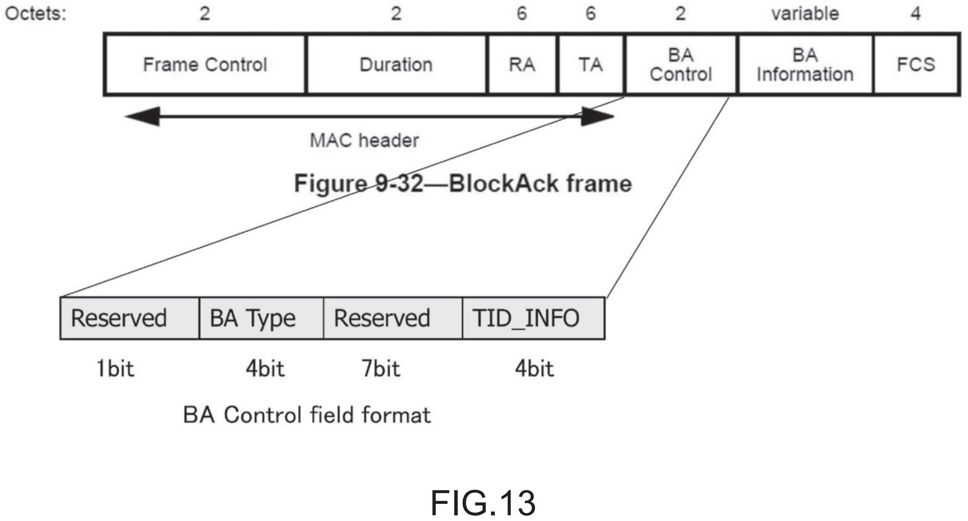

Fig. 13 illustrates an example of a format of a BlockAck frame that stores therein information regarding whether a request about mapping that is made by the non-AP MLD 1/2 is to be accepted by the AP MLD 1. The information regarding whether to accept a request about mapping is reported using one bit from a 1-bit Reserved field at the beginning of a BA Control field in the BlockAck frame or from a 7-bit Reserved field. The Reserved field corresponds to a first field that stores therein information regarding whether to accept a request for a change in setting. For example, "0" is set when the request is to be accepted, and "1" is set when the request is to be denied. When the request is to be denied, Link ID (3 bits) and Direction (2 bits) may be reported as information indicating a change to a new setting, using the 7-bit Reserved field. The Reserved field in this case corresponds to a second field that stores therein information indicating a change to a setting different from the setting for the change indicated by the report information.

### [First Sequence Example]

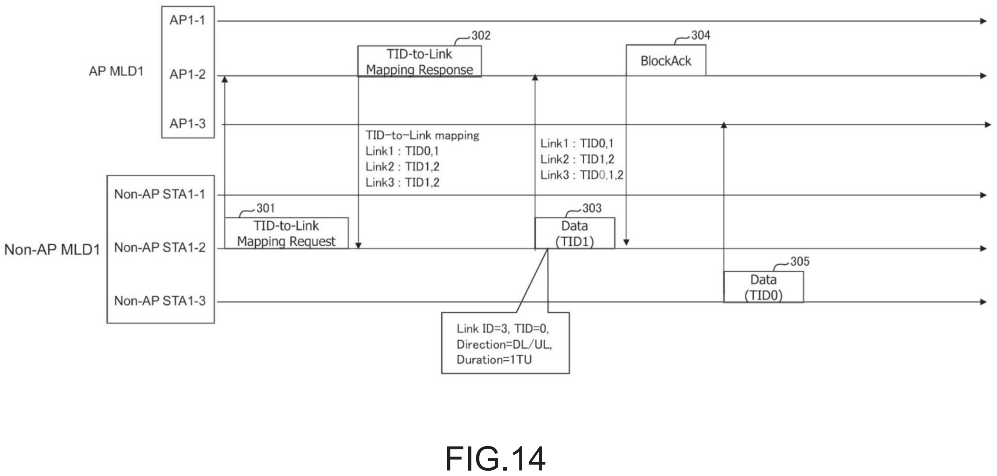

Fig. 14 illustrates an example of a sequence used to temporarily change TID-to-link mapping in response to information being reported by the non-AP MLD 1. Prior to the sequence, the AP MLD 1 and the non-AP MLD 1 may exchange, upon establishing connection, information regarding whether a request for a change in TID-to-link mapping can be transmitted and received in an A-Control field. Further, the AP MLD 1 and the non-AP MLD 1 may exchange information regarding whether information regarding whether the information regarding whether the request for a change in TID-to-link mapping can be accepted, can be returned. The exchange of ability information upon establishing connection may also be performed similarly in and after a second sequence example described later. It is assumed that the AP 1-1 and the non-AP STA 1-1 operate using the link 1, the AP 1-2 and the non-AP STA 1-2 operate using the link 2, and the AP 1-3 and the non-AP STA 1-3 operate using the link 3.

The non-AP MLD 1 transmits a TID-to-link mapping request 301 to the AP MLD 1 using the link 2, the TID-to-link mapping request 301 being used to make a request that TID 0 be mapped to the link 1, TID 1 be mapped to the links 1 to 3, and TID 2 be mapped to the links 2 and 3. The AP MLD 1 accepts the request made by the non-AP MLD 1, and transmits a TID-to-link mapping response 302 as a response, the TID-to-link mapping response 302 indicating that TID 0 is mapped to the link 1, TID 1 is mapped to the links 1 to 3, and TID 2 is mapped to the links 2 and 3.

The non-AP MLD 1 also transmits and receives TID 0 using the link 3. Thus, the non-AP MLD 1 generates a Link mapping change subfield that stores therein (Link ID = 3, TID = 0, Direction = DL/UL, and Duration = 1TU) as report information, and transmits, using the link 2, a frame (a data frame) 303 that includes a header (a MAC header) including the Link mapping change subfield. Note that a setting for Duration may be omitted. In this case, the change in setting may be maintained unless there is a future change, or the change in setting may be effective for a predetermined period of time. A frame body field of the frame 303 stores therein data of TID 1. Overhead involved in a change in mapping can be reduced by transmitting data concurrently with transmission of report information regarding the change in mapping. When, for example, data of TID 0 is expected to be delayed, the non-AP MLD 1 can temporarily add a link used to transmit data of TID 0 while transmitting data of another TID such as a TID.

When the AP MLD 1 receives the frame 303, the AP MLD 1 changes mapping such that TID 0 can be transmitted and received using the link 3, and transmits BlockAck 304 at the same time. In this case, BlockAck 304 may include information regarding whether to accept a request for a change in mapping, as illustrated in Fig. 13.

When the non-AP MLD 1 receives BlockAck 304, the non-AP MLD 1 determines that a request about mapping has been approved, and changes mapping such that TID 0 can be transmitted and received using the link 3. Thereafter, the non-AP MLD 1 transmits data 305 of TID 0 to the AP MLD 1 using the link 3.

### (Modification of First Sequence Example)

In the first sequence example in Fig. 14 described above, the frame 303 for which "Link ID = 3, TID = 0, Direction = DL/UL, and Duration = 1TU" is set in order to also transmit and receive TID 0 using the link 3. However, the state may be returned to a default state (default TID-to-link mapping) in which mapping is reset once and every TID is mapped to all of the links. In this case, it is sufficient if an instruction to reset mapping is given by setting information indicating a resetting of mapping for the frame 303. For example, an instruction to reset mapping may be given by setting a link ID that is not used as a value of the Link ID and by setting a value (a specified value such as 8) that is not used as a value of the TID upon normal operation. Likewise, DL/UL may also be specified for Direction. Further, Duration may also be specified.

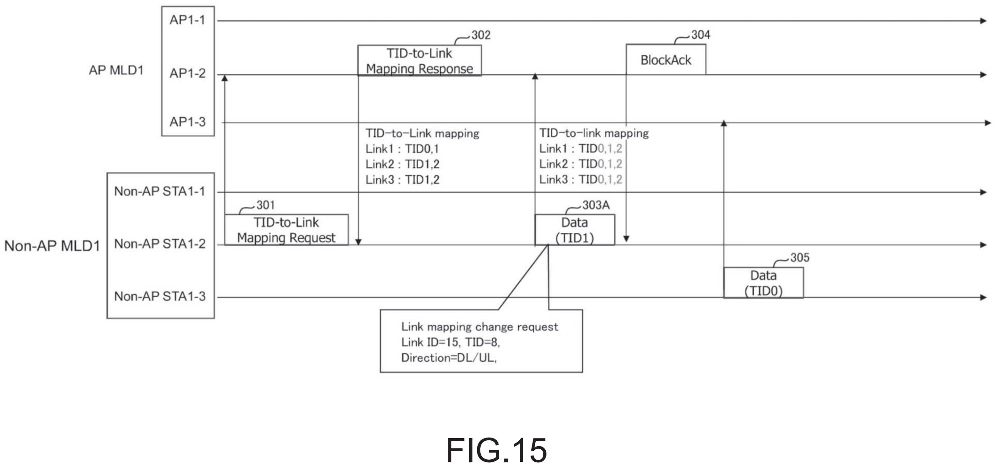

Fig. 15 illustrates a sequence according to a modification of the first sequence example. This sequence is similar to the sequence illustrated in Fig. 14, although the frame 303 transmitted by the non-AP MLD 1 has been changed to a frame 303A. More specifically, the non-AP MLD 1 transmits, using the link 2, the frame (a data frame) 303A that includes a header (a MAC header) including a Link mapping change subfield that stores therein (Link ID = 15, TID = 8, and Direction = DL/UL) as report information. In the example illustrated in the figure, Duration is omitted, but Duration may be stored. Accordingly, a period of time for resetting is performed may be specified, and after an elapse of the specified period of time, the state may be returned to a state before resetting.

### [Second Sequence Example]

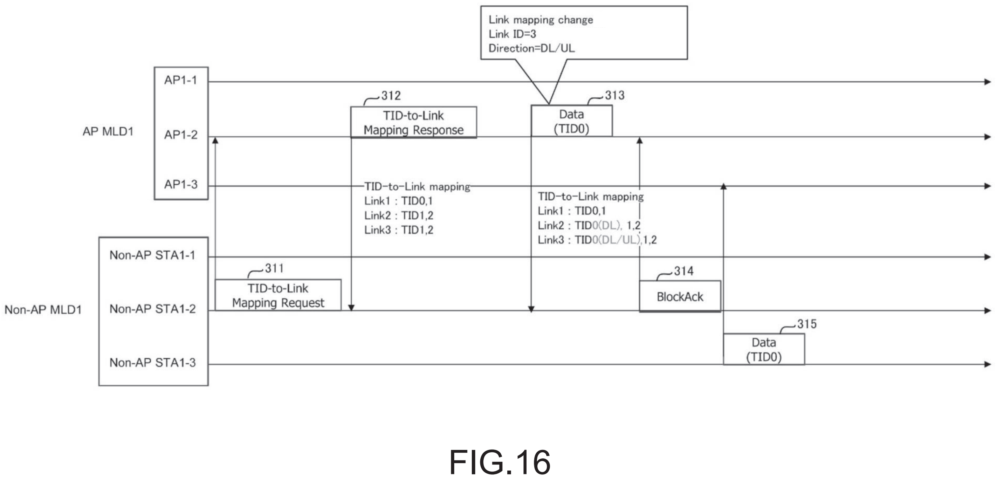

Fig. 16 illustrates an example of a sequence used to change assignment of a TID in response to a report from the AP MLD 1. As in the case of the first sequence example, it is assumed that the AP 1-1 and the non-AP STA 1-1 operate using the link 1, the AP 1-2 and the non-AP STA 1-2 operate using the link 2, and the AP 1-3 and the non-AP STA 1-3 operate using the link 3.

As in the case of the first sequence example described above, the non-AP MLD 1 transmits a TID-to-link mapping request 311 to the AP MLD 1 using the link 2, the TID-to-link mapping request 311 being used to make a request that TID 0 be mapped to the link 1, TID 1 be mapped to the links 1 to 3, and TID 2 be mapped to the links 2 and 3. The AP MLD 1 determines that the request made by the non-AP MLD 1 is to be accepted, and transmits a TID-to-link mapping response 312.

The non-AP MLD 1 also transmits and receives data of TID 0 using the link 3. Thus, as illustrated in Fig. 16, the non-AP MLD 1 generates a Link mapping change subfield that stores therein (Link ID = 3 and Direction = DL/UL) as report information, and transmits, using the link 2, a frame 313 that includes a header including the Link mapping change subfield. A frame body field of the frame 313 may store therein the data of TID 0, a TID stored in a TID field of a QoS Control field may be utilized as a TID to be added to be mapped, and a format from which a TID field has been omitted may be used as a format of the Link mapping change subfield. When the non-AP MLD 1 is expected to be delayed in transmitting data of TID 0, the AP MLD 1 can also temporarily add a link for TID 0 while transmitting the data of TID 0 to the non-AP MLD 1. Note that, in this example, the AP MLD 1 transmits data of TID 0 together with report information using the link 2, without TID 0 being mapped to the link 2. Such an operation is allowed to be performed by using an MU-EDCA parameter used as an EDCA parameter used upon acquiring a right to transmission of the frame 313. When the multi-user (MU)-EDCA parameter is used, there is a need to perform, for example, a backoff for a longer period of time, compared to when the EDCA parameter is used.

When the non-AP MLD 1 receives the frame 313, the non-AP MLD 1 transmits, using the link 2, BlockAck 314, which serves as a confirmation response made to confirm that the frame 313 has been received, and subsequently transmits, using the link 3, a data frame 315 that includes the data of TID 0.

### [Third Sequence Example]

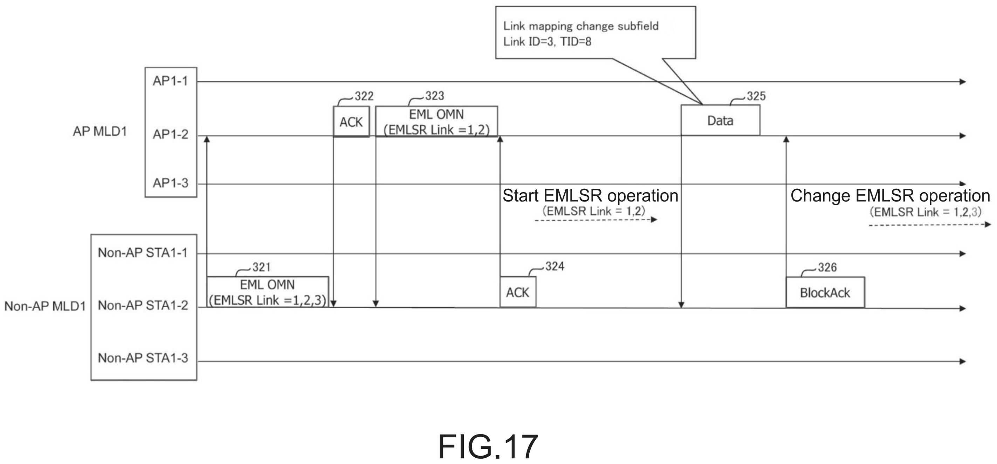

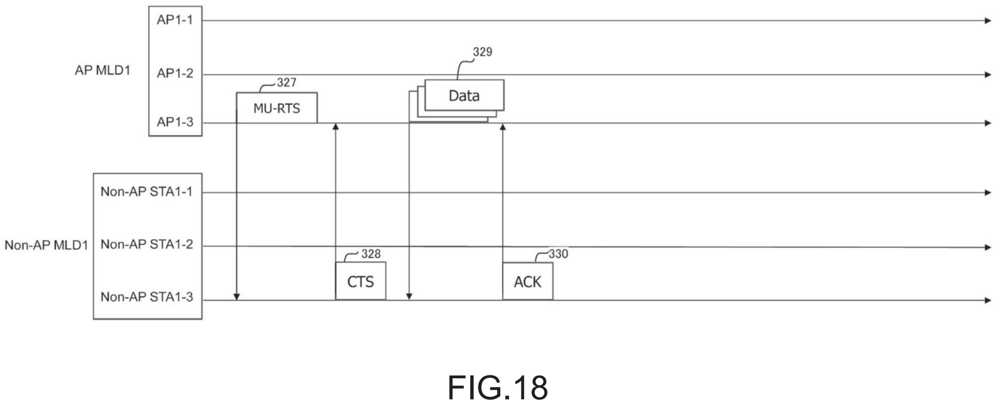

Fig. 17 illustrates an example of a sequence used to change an EMLSR link during an EMLSR operation. Fig. 18 illustrates a sequence subsequent to the sequence illustrated in Fig. 17. As in the case of the first sequence example, it is assumed that the AP 1-1 and the non-AP STA 1-1 operate using the link 1, the AP 1-2 and the non-AP STA 1-2 operate using the link 2, and the AP 1-3 and the non-AP STA 1-3 operate using the link 3.

The non-AP MLD 1 transmits, using the link 2, an EML operating mode notification (EML OMN) frame 321 in which the links 1 to 3 are specified as EMLSR links.

After transmitting ACK 322, the AP MLD 1 transmits an EML OMN frame 323 in which only the links 1 and 2 are specified as EMLSR links. The non-AP MLD 1 transmits ACK 324, and starts performing an EMLSR operation using the links 1 and 2, as illustrated in Fig. 17.

During performing the EMLSR operation, the AP MLD 1 transmits, using the link 2, a frame (a data frame) 325 that includes a Link mapping change subfield storing therein a link ID of the link 3 and "TID = 8", in order to add an EMLSR link. The AP MLD 1 reports a change in EMLSR link by using "8", which is a value that is not used as a TID. A frame body field of the frame 325 stores therein data.

When the non-AP MLD 1 receives the frame 325, the non-AP MLD 1 transmits BlockAck 326, and performs control such that reception of a specific frame (such as an MU-RTS frame) and channel scanning can also be performed using the link 3, as illustrated in Fig. 17.

When the non-AP MLD 1 receives an MU-RTS frame 327 from the AP MLD 1 using the link 3, the non-AP MLD 1 transmits a CTS frame 328, and performs switching such that an RF chain (an antenna, an amplification section, and a wireless interface section) operated using the links 1 and 2 is operated using the link 3 on which the MU-RTS frame 327 has been received, as illustrated in Fig. 18. This enables transmission and reception by a plurality of streams using the link 3 (such as spatial multiplexing communication).

The AP MLD 1 spatially multiplexes a plurality of pieces of data 329 using the link 3. The non-AP MLD 1 receives the spatially multiplexed pieces of data 329 using the non-AP STAs 1-1, 1-2, and 1-3 each set for the link 3, and processes the received data by performing space separation. When the non-AP MLD 1 demodulates the data successfully, the non-AP MLD 1 transmits ACK 330 using the non-AP STA 1-3.

The example in which spatial multiplexing is performed by the AP MLD 1 has been described above. However, spatial multiplexing may be performed by the non-AP MLD 1.

Note that, in this example, when a frame that includes a Link mapping change subfield storing therein, for example, "0" for a TID instead of "8" in the frame 325, is transmitted, TID-to-link mapping can be changed during performing the EMLSR operation, as in the first or second sequence example, instead of an EMLSR link being changed.

### [Fourth Sequence Example]

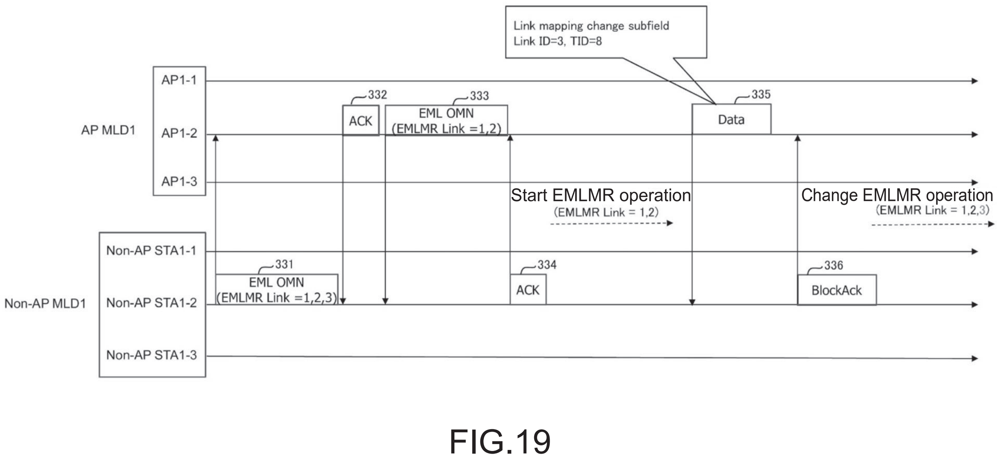

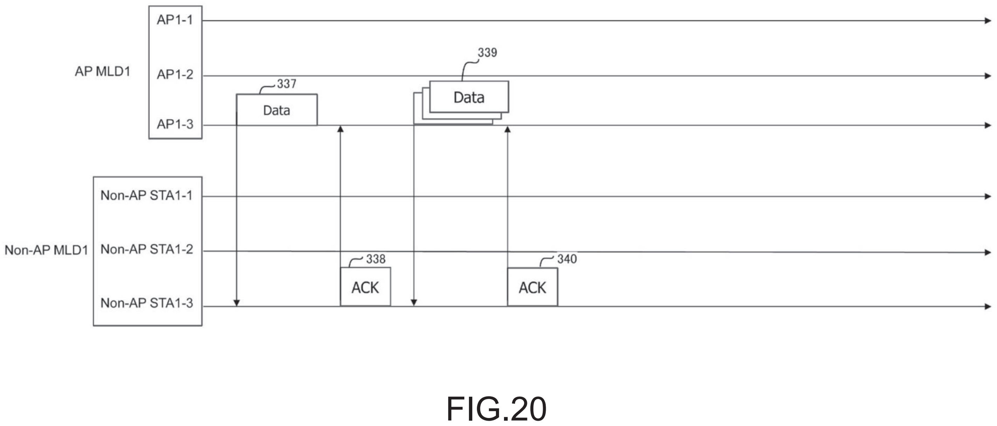

Fig. 19 illustrates an example of a sequence used to change an EMLMR link during an EMLMR operation. Fig. 20 illustrates a sequence subsequent to the sequence illustrated in Fig. 19. As in the case of the first sequence example, it is assumed that the AP 1-1 and the non-AP STA 1-1 operate using the link 1, the AP 1-2 and the non-AP STA 1-2 operate using the link 2, and the AP 1-3 and the non-AP STA 1-3 operate using the link 3.

The non-AP MLD 1 transmits, using the link 2, an EML operating mode notification (EML OMN) frame 331 in which the links 1 to 3 are specified as EMLMR links.

After transmitting ACK 332, the AP MLD 1 transmits an EML OMN frame 333 in which only the links 1 and 2 are specified as EMLMR links. The non-AP MLD 1 transmits ACK 324, and starts performing an EMLMR operation using the links 1 and 2, as illustrated in Fig. 19.

During performing the EMLMR operation, the AP MLD 1 transmits, using the link 2, a frame (a data frame) 335 that includes a Link mapping change subfield storing therein a link ID of the link 3 and "TID = 8", in order to add an EMLMR link. The AP MLD 1 reports a change in EMLMR link by using "8", which is a value that is not used as a TID. A frame body field of the frame 335 stores therein data.

When the non-AP MLD 1 receives the frame 335, the non-AP MLD 1 transmits BlockAck 336, and performs control such that a frame can also be transmitted and received using the link 3, as illustrated in Fig. 19.

When the non-AP MLD 1 receives a data frame 337 from the AP MLD 1 using the link 3, the non-AP MLD 1 transmits ACK 328, and performs switching such that an RF chain (an antenna, an amplification section, and a wireless interface section) operated using the links 1 and 2 is operated using the link 3 on which the data frame 337 has been received, as illustrated in Fig. 20. This enables transmission and reception by a plurality of streams using the link 3 (such as spatial multiplexing communication).

The AP MLD 1 spatially multiplexes a plurality of pieces of data 339 using the link 3. The non-AP MLD 1 receives the spatially multiplexed pieces of data 339 using the non-AP STAs 1-1, 1-2, and 1-3 each set for the link 3, and performs space separation processing on the received data. When the non-AP MLD 1 demodulates the data successfully, the non-AP MLD 1 transmits ACK 340 using the non-AP STA 1-3.

The example in which spatial multiplexing is performed by the AP MLD 1 has been described above. However, spatial multiplexing may be performed by the non-AP MLD 1.

Note that, also in this example, when a frame that includes a Link mapping change subfield storing therein, for example, "0" for a TID instead of "8", is transmitted, TID-to-link mapping can be changed during performing the EMLMR operation, as in the first or second sequence example, instead of an EMLMR link being changed.

According to the present embodiment, overhead involved in a procedure necessary upon changing a link-related setting can be reduced by transmitting report information indicating, for example, addition or exclusion of a TID (a data type) with respect to only a portion of a plurality of links. Further, transmission of report information and transmission of data can be performed at the same time by storing the report information in a header and by storing the data in a body field. This makes it possible to transmit the report information while reducing delay in data transmission.

### <Example of Configuration of Computer>

The series of processes described above can be performed using hardware or software. When the series of processes is performed using software, a program included in the software is installed from a program recording medium on, for example, a computer incorporated into dedicated hardware or a general-purpose personal computer.

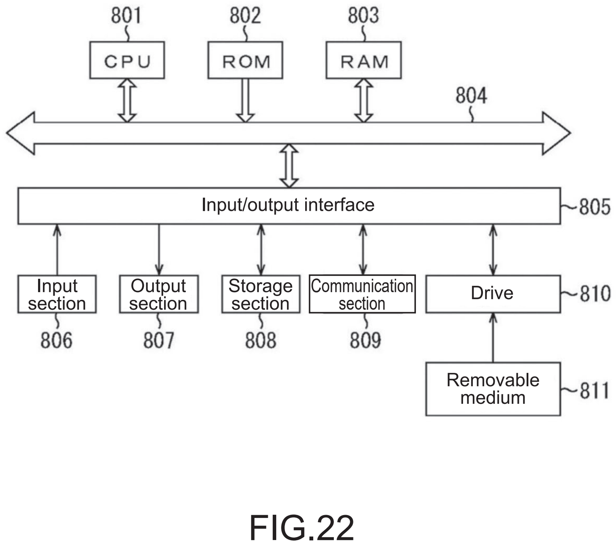

Fig. 22 is a block diagram of an example of a configuration of hardware of a computer that performs the series of processes described above using a program.

A central processing unit (CPU) 801, a read only memory (ROM) 802, and a random access memory (RAM) 803 are connected to each other through a bus 804.

Further, an input/output interface 805 is connected to the bus 804. An input section 806 that includes, for example, a keyboard and a mouse, and an output section 807 that includes, for example, a display and a speaker are connected to the input/output interface 805. Further, a storage section 808 that includes, for example, a hard disk and a nonvolatile memory, a communication section 809 that includes, for example, a network interface, and a drive 810 that drives a removable medium 811 are connected to the input/output interface 805.

In a computer having the configuration described above, the series of processes described above is performed by the CPU 801 loading, for example, a program stored in the storage section 808 into the RAM 803 and executing the program via the input/output interface 805 and the bus 804.

For example, the program executed by the CPU 801 is provided by being recorded in the removable medium 811 or provided via a wired or wireless transmission medium such as a local area network, the Internet, or digital broadcasting, and the provided program is installed on the storage section 808.

Note that the program executed by the computer may be a program in which processes are chronologically performed in the order of the description herein, or may be a program in which processes are performed in parallel or a process is performed at a necessary timing such as a timing of calling.

### <Application Examples>

The present technology can be applied to various products. For example, the base station (a communication apparatus) 100 illustrated in Fig. 2 and the terminal apparatus (a communication apparatus) 200 illustrated in Figs. 3 to 5 may each be implemented as a mobile terminal such as a smartphone, a tablet personal computer (PC), a laptop, a portable game terminal, or a digital camera; a fixed terminal such as a television receiver, a printer, a digital scanner, or a network storage; or an in-vehicle terminal such as a car navigation apparatus. Furthermore, the base station (a communication apparatus) 100 and the terminal apparatus (a communication apparatus) 200 may each be implemented as a machine-to-machine communication (M2M) terminal such as a smart meter, a vending machine, a remote monitoring apparatus, or a point-of-sale (POS) terminal. Moreover, each of the base station (a communication apparatus) 100 and the terminal apparatus (a communication apparatus) 200 may be a wireless communication module (such as an integrated circuit module formed using one die) included in a corresponding one of these terminals.

On the other hand, for example, the base station (a communication apparatus) 100 and the terminal apparatus (a communication apparatus) 200 may each be implemented as a wireless LAN AP (a wireless base station) that includes or does not include a router function. Further, the base station (a communication apparatus) 100 and the terminal apparatus (a communication apparatus) 200 may each be implemented as a mobile wireless LAN router. Furthermore, each of the base station (a communication apparatus) 100 and the terminal apparatus (a communication apparatus) 200 may be a wireless communication module (such as an integrated circuit module formed using one die) included in a corresponding one of these apparatuses.

### <Example of Configuration of Smartphone>

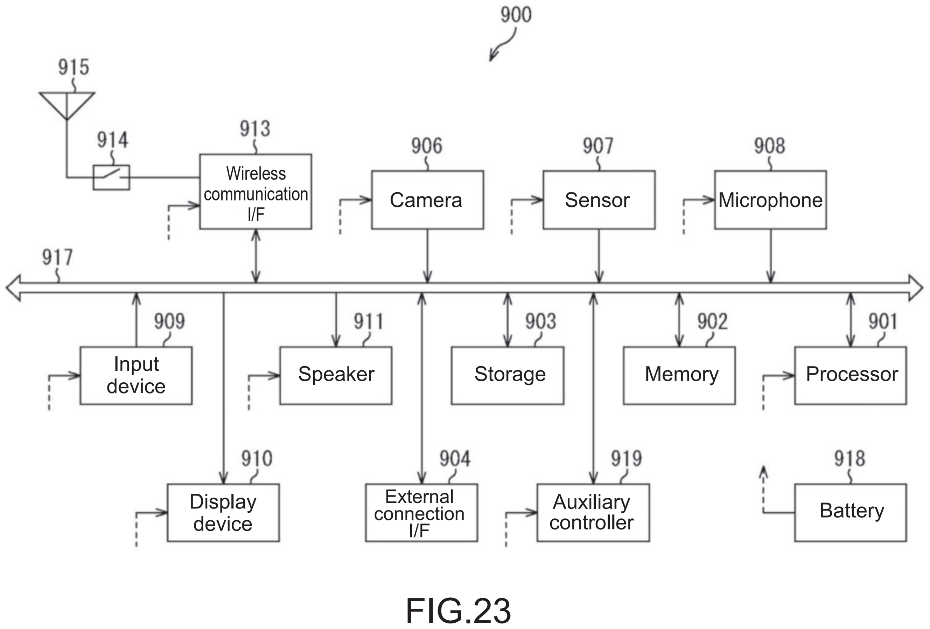

Fig. 23 is a block diagram of an example of a schematic configuration of a smartphone to which the present technology is applied.

A smartphone 900 includes a processor 901, a memory 902, a storage 903, an external connection interface 904, a camera 906, a sensor 907, a microphone 908, an input device 909, and a display device 910. Furthermore, the smartphone 900 includes a speaker 911, a wireless communication interface 913, an antenna switch 914, an antenna 915, a bus 917, a battery 918, and an auxiliary controller 919.

The processor 901 may be, for example, a CPU or a system on chip (SoC), and restricts functions of an application layer and other layers of the smartphone 900.

The memory 902 includes a RAM and a ROM, and stores therein a program that is executed by the processor 901, and data.

The storage 903 includes a storage medium such as a semiconductor memory or a hard disk.

The external connection interface 904 is an interface used to connect an external device such as a memory card or a Universal Serial Bus (USB) device to the smartphone 900.

The camera 906 includes, for example, a charge-coupled device (CCD) or complementary metal-oxide semiconductor (CMOS) imaging element, and generates a captured image.

The sensor 907 includes a sensor group such as a positioning sensor, a gyroscope, a geomagnetic sensor, and an acceleration sensor.

The microphone 908 converts, into an audio signal, sound input to the smartphone 900.

The input device 909 includes, for example, a touch sensor that detects touch on a screen of the display device 910, a keypad, a keyboard, a button, or a switch, and receives an operation performed by a user or information input by the user.

The display device 910 includes a screen such as a liquid crystal display (LCD) or an organic light-emitting diode (OLED) display, and converts, into sound, the audio signal output by the smartphone 900.

The wireless communication interface 913 supports at least one of wireless LAN standards such as IEEE 802.11a, 11b, 11g, 11ac, 11ad, 11ax, 11ay, and 11be, and performs wireless communication.

The wireless communication interface 913 communicates with other apparatuses through a wireless LAN AP in an infrastructure mode. Further, the wireless communication interface 913 directly communicates with other apparatuses in an ad hoc mode or a direct communication mode such as Wi-Fi Direct.

Note that, in Wi-Fi Direct, one of two terminals operates as an AP but communication is directly performed between the terminals, which is different from the ad hoc mode.

Typically, the wireless communication interface 913 includes, for example, a baseband processor, a radio frequency (RF) circuit, and a power amplifier. The wireless communication interface 913 may be a one-chip module in which a memory that stores therein a communication control program, a processor that executes the program, and related circuits are integrated.

In addition to the wireless LAN scheme, the wireless communication interface 913 may support other types of wireless communication schemes such as a near field communication scheme, a proximity wireless communication scheme, and a cellular communication scheme.

The antenna switch 914 switches a connection destination of the antenna 915 between circuits of a plurality of circuits (such as circuits for different wireless communication schemes) included in the wireless communication interface 913.

The antenna 915 includes at least one antenna element (such as a plurality of the antenna elements included in a multiple-input multiple-output (MIMO) antenna), and is used for transmission and reception of a radio signal through the wireless communication interface 913.

Note that the smartphone 900 is not limited to the example illustrated in Fig. 23, and may include a plurality of antennas (such as an antenna for wireless LAN and an antenna of a proximity wireless communication scheme). In this case, the antenna switch 914 may be omitted from the configuration of the smartphone 900.

The processor 901, the memory 902, the storage 903, the external connection interface 904, the camera 906, the sensor 907, the microphone 908, the input device 909, the display device 910, the speaker 911, the wireless communication interface 913, and the auxiliary controller 919 are connected to each other through the bus 917.

The battery 918 supplies power to each block of the smartphone 900 illustrated in Fig. 23 through a power supply line partially indicated using a broken line in the figure. The auxiliary controller 919 operates a minimum necessary function of the smartphone 900 in, for example, a sleep mode.

In the smartphone 900 illustrated in Fig. 23, for example, the communication section 110, communication control section 111, and control section 130 illustrated in Fig. 2, as well as the communication section 210, communication control section 211, and control section 230 illustrated in Figs. 3 to 5 may be implemented by the wireless communication interface 913. Further, at least a portion of these functions may be implemented by the processor 901 or the auxiliary controller 919.

Note that the smartphone 900 may operate as a wireless AP (a software AP) when the processor 901 executes an AP function at an application level. Further, the wireless communication interface 913 may include the wireless AP function.

Furthermore, the smartphone 900 may include a biometric authentication section (fingerprint authentication, palm-shape authentication, voice authentication, blood vessel authentication, face authentication, iris authentication, and retina authentication). In this case, the wireless communication interface 913 by which the communication section 110, communication control section 111, and control section 130 illustrated in Fig. 2, as well as the communication section 210, communication control section 211, and control section 230 illustrated in Figs. 3 to 5 are implemented is configured to receive power supply from the same battery 918 as at least one of the display device 910, the speaker 911, or the biometric authentication section.

Moreover, in the smartphone 900, information is displayed using at least one of the display device 910 or the speaker 911 on the basis of communication performed with an external apparatus using the wireless communication interface 913. In this case, information related to the present technology may be output as the information from at least one of the display device 910 or the speaker 911.

### <Example of Configuration of In-vehicle Apparatus>

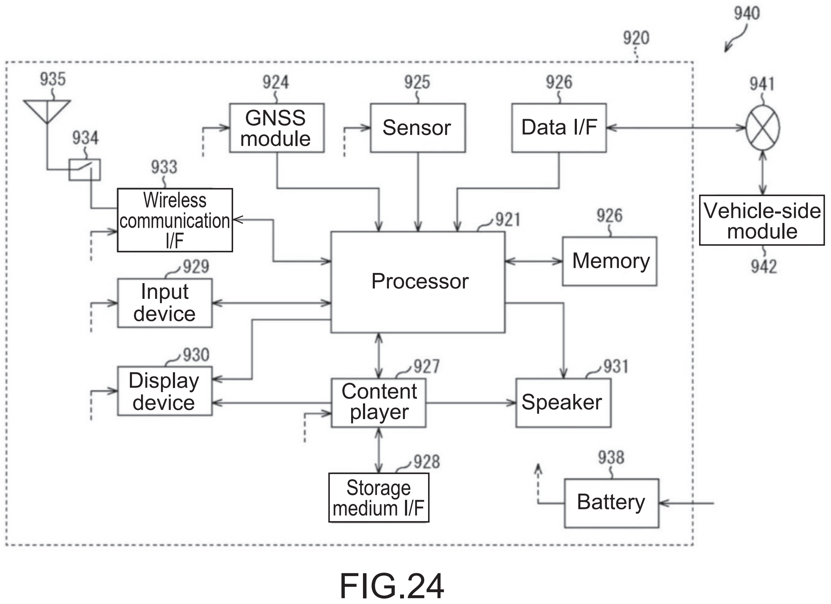

Fig. 24 is a block diagram of an example of a schematic configuration of an in-vehicle apparatus 920 to which the present technology is applied.

The in-vehicle apparatus 920 includes a processor 921, a memory 922, a global navigation satellite system (GNSS) module 924, a sensor 925, a data interface 926, a content player 927, and a storage medium interface 928. Further, the in-vehicle apparatus 920 includes an input device 929, a display device 930, a speaker 931, a wireless communication interface 933, an antenna switch 934, an antenna 935, and a battery 938.

The processor 921 may be, for example, a CPU or an SoC, and controls a navigation function and other functions of the in-vehicle apparatus 920. Further, the processor 921 can also control a drive system of a vehicle, such as a brake, an accelerator, or a steering, on the basis of information obtained through communication based on the present technology.

The memory 922 includes a RAM and a ROM, and stores therein a program that is executed by the processor 921, and data.

The GNSS module 924 measures a location (for example, latitude, longitude, and altitude) of the in-vehicle apparatus 920 using a GNSS signal received from a GNSS satellite.

The sensor 925 includes a sensor group such as a gyroscope, a geomagnetic sensor, and an atmospheric-pressure sensor.

The data interface 926 is connected to an in-vehicle network 941 through, for example, a terminal (not illustrated), and acquires data, such as in-vehicle data, that is generated on the vehicle side.

The content player 927 plays back content stored in a storage medium (such as a CD or a DVD) inserted into the storage medium interface 928.

The input device 929 includes, for example, a touch sensor that detects touch on a screen of the display device 930, a button, or a switch, and receives an operation performed by the user or information input by the user.

The display device 930 includes a screen such as an LCD or an OLED display, and displays thereon an image for the navigation function or for content to be played back.

The speaker 931 outputs sound for the navigation function or for the content to be played back.

Note that, in the in-vehicle apparatus 920, the navigation function and the function of the content player 927 are optional. The navigation function and the content player 927 may be excluded from the configuration of the in-vehicle apparatus 920.

The wireless communication interface 933 supports at least one of the wireless LAN standards such as IEEE 802.11a, 11b, 11g, 11n, 11ac, 11ad, 11ax, 11ay, and 11be, and performs wireless communication. The wireless communication interface 933 communicates with other apparatuses through a wireless LAN AP in the infrastructure mode. Further, the wireless communication interface 933 directly communicates with other apparatuses in the ad hoc mode or the direct communication mode such as Wi-Fi Direct.

Typically, the wireless communication interface 933 includes, for example, a baseband processor, an RF circuit, and a power amplifier. The wireless communication interface 933 may be a one-chip module in which a memory that stores therein a communication control program, and a processor that executes the program or related circuits are integrated. In addition to the wireless LAN scheme, the wireless communication interface 933 may support other types of wireless communication schemes such as a near field communication scheme, a proximity wireless communication scheme, and a cellular communication scheme.

The antenna switch 934 switches a connection destination of the antenna 935 between circuits of a plurality of circuits included in the wireless communication interface 933.

The antenna 935 includes at least one antenna element, and is used for transmission and reception of a radio signal through the wireless communication interface 933.

Note that the in-vehicle apparatus 920 is not limited to the example in Fig. 24, and may include a plurality of the antennas 935. In this case, the antenna switch 934 may be omitted from the configuration of the in-vehicle apparatus 920.

The battery 938 through a power supply line partially indicated using a broken line in the figure, in the in-vehicle apparatus 920 illustrated in Fig. 24, for example, the communication section 110, communication control section 111, and control section 130 illustrated in Fig. 2, as well as the communication section 210, communication control section 211, and control section 230 illustrated in Figs. 3 to 5 may be implemented by the wireless communication interface 933. Further, at least a portion of these functions may be implemented by the processor 921.

Further, the wireless communication interface 933 may operate as each of the base station (a communication apparatus) 100 and terminal apparatus (a communication apparatus) 200 described above and provide wireless connection to a terminal of the user in the vehicle.

Furthermore, the present technology may be implemented as an in-vehicle system (or vehicle) 940 that includes at least one block of the in-vehicle apparatus 920 described above, the in-vehicle network 941, and a vehicle-side module 942. The vehicle-side module 942 generates vehicle-side data such as a vehicle speed, a rotation speed of an engine, or failure information, and outputs the generated data to the in-vehicle network 941.

### <Example of Configuration of Wireless AP>

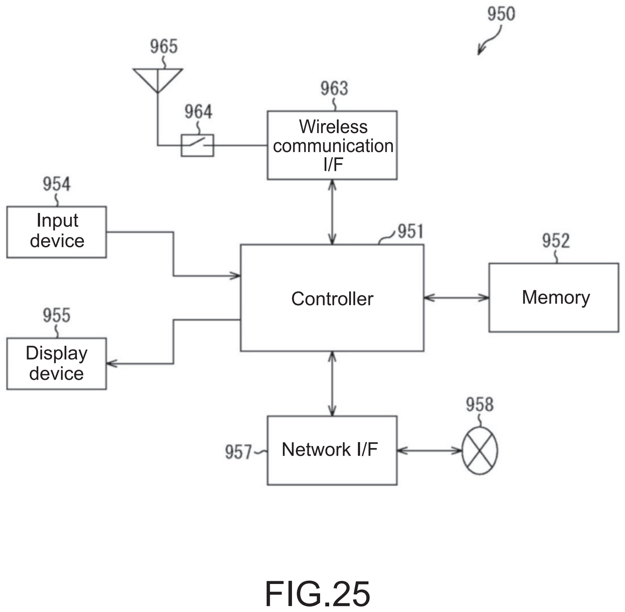

Fig. 25 is a block diagram of an example of a schematic configuration of a wireless AP 950 to which the present technology is applied.

The wireless AP 950 includes a controller 951, a memory 952, an input device 954, a display device 955, a network interface 957, a wireless communication interface 963, an antenna switch 964, and an antenna 965.

The controller 951 may be, for example, a CPU or a digital signal processor (DSP), and operates various functions (such as access restriction, routing, encryption, firewall, and log management) of the Internet protocol (IP) layer and higher layers of the wireless AP 950.

The memory 952 includes a RAM and a ROM, and stores therein a program that is executed by the controller 951, and various control information (such as a terminal list, a routing table, an encryption key, a security setting, and a log).

The input device 954 includes, for example, a button and a switch, and receives an operation performed by a user.

The display device 955 includes, for example, an LED lamp, and displays thereon an operation status of the wireless AP 950.

The network interface 957 is a wired communication interface used to connect the wireless AP 950 to a wired communication network 958. The network interface 957 may include a plurality of connection terminals. The wired communication network 958 may be a LAN such as Ethernet (registered trademark), or may be a wide area network (WAN).

The wireless communication interface 963 supports at least one of the wireless LAN standards such as IEEE 802.11a, 11b, 11g, 11n, 11ac, 11ad, 11ax, 11ay, and 11be, and provides wireless connection as an AP for a nearby terminal.

Typically, the wireless communication interface 963 includes, for example, a baseband processor, an RF circuit, and a power amplifier.

The wireless communication interface 963 may be a one-chip module in which a memory that stores therein a communication control program, and a processor that executes the program or related circuits are integrated.

The antenna switch 964 switches a connection destination of the antenna 965 between circuits of a plurality of circuits included in the wireless communication interface 963, and the antenna 965 includes at least one antenna element, and is used for transmission and reception of a radio signal through the wireless communication interface 963.

In the wireless AP 950 illustrated in Fig. 25, for example, the communication section 110, communication control section 111, and control section 130 illustrated in Fig. 2, as well as the communication section 210, communication control section 211, and control section 230 illustrated in Figs. 3 to 5 may also be implemented by the wireless communication interface 963. Further, at least a portion of these functions may be implemented by the controller 951.

Note that the embodiments described above are examples for implementing the present technology, and there is a correspondence relationship between the matter in the embodiments and the claimed invention-specifying matter. Likewise, there is a correspondence relationship between the claimed invention-specifying matter and the matter in the embodiments of the present technology when those are denoted by the same name. However, the present technology is not limited to the embodiments, and can be implemented by various modifications being made to the embodiments without departing from the scope of the present technology.

Further, the processing procedures described in the embodiments described above may be considered a method including a series of the procedures, or may be considered a program used to cause this computer to execute the series of the procedures, or a recording medium that stores therein the program.

For example, a compact disc (CD), a MiniDisc (MD), a digital versatile disc (DVD), a memory card, or a Blu-ray (registered trademark) Disc can be used as this recording medium.

Note that the system as used herein refers to a collection of a plurality of components (such as apparatuses and modules (parts)) and it does not matter whether all of the components are in a single housing. Thus, a plurality of apparatuses accommodated in separate housings and connected to one another via a network, and a single apparatus in which a plurality of modules is accommodated in a single housing are both systems.

Further, the effects described herein are not limitative but are merely illustrative, and other effects may be provided.

The embodiments of the present technology are not limited to the examples described above, and various modifications may be made thereto without departing from the scope of the present technology.

For example, the present technology may have a configuration of cloud computing in which a single function is shared to be cooperatively processed by a plurality of apparatuses via a network.

Further, the respective steps described using the flowcharts described above may be performed by a single apparatus, or may be shared to be performed by a plurality of apparatuses.

Furthermore, when a single step includes a plurality of processes, the plurality of processes included in the single step may be performed by a single apparatus, or may be shared to be performed by a plurality of apparatuses.

The present embodiment may also have the following configurations.

### [Appendix]

(1) A communication control apparatus, including
   a control section that controls a plurality of wireless communication sections wirelessly connected to a wireless communication apparatus using respective links of a plurality of links for which respective settings have been performed,
   the control section performing control such that report information received by any of the plurality of wireless communication sections is acquired and such that a setting of a target link that is a portion of the plurality of links is changed from a current setting to a target setting, on the basis of the report information, the report information indicating a change applied to the current setting such that the setting of the target link is changed from the current setting to the target setting.
(2) The communication control apparatus according to (1), in which
   the report information includes addition or exclusion of a type of data communicable using the target link.
(3) The communication control apparatus according to (2), in which
   the report information includes a period of time for which data of the data type is communicable.
(4) The communication control apparatus according to (2) or (3), in which
   the report information includes a communication direction in which data of the data type is communicated, and
   the communication direction includes a first direction in which the data is received from the wireless communication apparatus, or a second direction in which the data is transmitted to the wireless communication apparatus.
(5) The communication control apparatus according to any one of (1) to (4), in which
   the report information is included in a header of a frame,
   the control section acquires the report information from the header of the frame received by a wireless communication section included in the plurality of wireless communication sections, and
   data is stored in a body field of the frame.
(6) The communication control apparatus according to (5), in which
   the report information includes addition or exclusion of a type of data communicable using the target link,
   the header includes a field that stores therein a data type of the data stored in the body field of the frame, and
   the data type stored in the field is used as the data type indicated by the report information.
(7) The communication control apparatus according to any one of (1) to (6), in which
   the control section performs control such that a wireless communication section included in the plurality of wireless communication sections transmits a frame to the wireless communication apparatus,
   a frame of a confirmation response to the transmitted frame includes the report information, the confirmation response frame being transmitted by the wireless communication apparatus, and
   the control section acquires the report information from the confirmation response frame received by the wireless communication section.
(8) The communication control apparatus according to any one of (2) to (4), (6), and (8) or according to (5) or (7) depending from (2), in which
   the report information includes an identifier of the data type added or excluded due to the change, and an identifier of the target link.
(9) The communication control apparatus according to any one of (1) to (8), in which
   the control section performs an enhanced multi-link single radio (EMLSR) operation or an enhanced multi-link multi radio (EMLMR) operation, and
   the report information includes addition of an EMLSR link or an EMLMR link.
(10) The communication control apparatus according to (9), in which
   the control section acquires the report information during performing the EMLSR operation or the EMLMR operation, and
   when the applied change indicated by the report information is not applicable to the target link, the control section adds, as an EMLSR link or an EMLMR link, the target link indicated by the report information.
(11) The communication control apparatus according to any one of (2) to (4), (6), and (8) or any one of (5), (7), (9), and (10) depending from (2), in which
   the data type is a traffic identifier (TID).
(12) The communication control apparatus according to (6) or any one of (7) to (11) depending from (2), in which
   the field storing therein the data type is a quality of service (QoS) control field or a high. throughput (HT) control field.
(13) A communication control apparatus, including
   a control section that controls a plurality of wireless communication sections wirelessly connected to a wireless communication apparatus using respective links of a plurality of links for which respective settings have been performed,
   the control section performing control such that report information is transmitted by any of the plurality of wireless communication sections, the report information indicating a change applied to a current setting of a target link such that a setting of the target link is changed from the current setting to a target setting, the target link being a portion of the plurality of links.
(14) The communication control apparatus according to (13), in which
   the report information includes addition or exclusion of a type of data communicable using the target link.
(15) The communication control apparatus according to (14), in which
   the report information includes a period of time for which data of the data type is communicable.
(16) The communication control apparatus according to (14) or (15), in which
   the report information includes a communication direction in which data of the data type is communicated, and
   the communication direction includes a first direction in which the data is transmitted to the wireless communication apparatus, or a second direction in which the data is received from the wireless communication apparatus.
(17) The communication control apparatus according to any one of (13) to (16), in which
   the control section performs control such that
   the report information is stored in a header of a frame,
   data is stored in a body field of the frame, and
   the frame is transmitted by a wireless communication section included in the plurality of wireless communication sections.
(18) The communication control apparatus according to (17), in which
   a first field in a frame of a confirmation response to the transmitted frame includes information indicating whether the change in setting is to be accepted,
   the control section acquires the information from the first field in the confirmation response frame received by the wireless communication section, and
   when the information indicates that the change in setting is to be accepted, the control section changes the setting of the target link from the current setting to the target setting on the basis of the report information.
(19) The communication control apparatus according to (18), in which
   when the information indicates that the change in setting is not to be accepted,
   the control section
   acquires, from a second field in the confirmation response frame, information indicating a change to a setting different from the setting for the change indicated by the report information, and
   changes the setting of the target link from the current setting to the other setting on the basis of the acquired information.
(20) The communication control apparatus according to any one of (13) to (19), in which
   the report information includes an identifier of a data type that is added or excluded due to the change, and an identifier of the target link.
(21) A communication control method, including
   controlling a plurality of wireless communication sections wirelessly connected to a wireless communication apparatus using respective links of a plurality of links for which respective settings have been performed; and
   performing control such that report information received by any of the plurality of wireless communication sections is acquired and such that a setting of a target link that is a portion of the plurality of links is changed from a current setting to a target setting, on the basis of the report information, the report information indicating a change applied to the current setting such that the setting of the target link is changed from the current setting to the target setting.
(22) A communication control method, including
   controlling a plurality of wireless communication sections wirelessly connected to a wireless communication apparatus using respective links of a plurality of links for which respective settings have been performed; and
   performing control such that report information is transmitted by any of the plurality of wireless communication sections, the report information indicating a change applied to a current setting of a target link such that a setting of the target link is changed from the current setting to a target setting, the target link being a portion of the plurality of links.

### Reference Signs List

100 AP (base station, communication apparatus, wireless communication apparatus)
110 communication section
111 communication control section
112 communication storage section
113 shared data processing section
121 individual data processing section
122 signal processing section
123 wireless interface section
124 amplification section
130 control section
140 storage section
150 antenna
160 wired communication section
200, 200A, 200B non-AP MLD (terminal apparatus, communication apparatus, wireless communication apparatus)
210 communication section
211 communication control section
212 communication storage section
213 shared data processing section
221 individual data processing section
222 signal processing section
222A simple signal processing section
223 wireless interface section
224 amplification section
230 control section
240 storage section
250 antenna
804 bus
805 input/output interface
806 input section
807 output section
808 storage section
809 communication section
810 drive
811 removable medium
900 smartphone
901 processor
902 memory
903 storage
904 external connection interface
906 camera
907 sensor
908 microphone
909 input device
910 display device
911 speaker
913 wireless communication interface
914 antenna switch
915 antenna
917 bus
918 battery
919 auxiliary controller
920 in-vehicle apparatus
921 processor
922 memory
924 GNSS module
925 sensor
926 data interface
927 content player
928 storage medium interface
929 input device
930 display device
931 speaker
933 wireless communication interface
934 antenna switch
935 antenna
938 battery
940 in-vehicle system (or vehicle)
941 in-vehicle network
942 vehicle-side module
951 controller
952 memory
954 input device
955 display device
957 network interface
958 wired communication network
963 wireless communication interface
964 antenna switch
965 antenna

## Claims

1. A communication control apparatus, comprising
a control section that controls a plurality of wireless communication sections wirelessly connected to a wireless communication apparatus using respective links of a plurality of links for which respective settings have been performed,
the control section performing control such that report information received by any of the plurality of wireless communication sections is acquired and such that a setting of a target link that is a portion of the plurality of links is changed from a current setting to a target setting, on a basis of the report information, the report information indicating a change applied to the current setting such that the setting of the target link is changed from the current setting to the target setting.

2. The communication control apparatus according to claim 1, wherein
the report information includes addition or exclusion of a type of data communicable using the target link.

3. The communication control apparatus according to claim 2, wherein
the report information includes a period of time for which data of the data type is communicable.

4. The communication control apparatus according to claim 2, wherein
the report information includes a communication direction in which data of the data type is communicated, and
the communication direction includes a first direction in which the data is received from the wireless communication apparatus, or a second direction in which the data is transmitted to the wireless communication apparatus.

5. The communication control apparatus according to claim 1, wherein
the report information is included in a header of a frame,
the control section acquires the report information from the header of the frame received by a wireless communication section included in the plurality of wireless communication sections, and
data is stored in a body field of the frame.

6. The communication control apparatus according to claim 5, wherein
the report information includes addition or exclusion of a type of data communicable using the target link,
the header includes a field that stores therein a data type of the data stored in the body field of the frame, and
the data type stored in the field is used as the data type indicated by the report information.

7. The communication control apparatus according to claim 1, wherein
the control section performs control such that a wireless communication section included in the plurality of wireless communication sections transmits a frame to the wireless communication apparatus,
a frame of a confirmation response to the transmitted frame includes the report information, the confirmation response frame being transmitted by the wireless communication apparatus, and
the control section acquires the report information from the confirmation response frame received by the wireless communication section.

8. The communication control apparatus according to claim 2, wherein
the report information includes an identifier of the data type added or excluded due to the change, and an identifier of the target link.

9. The communication control apparatus according to claim 1, wherein
the control section performs an enhanced multi-link single radio (EMLSR) operation or an enhanced multi-link multi radio (EMLMR) operation, and
the report information includes addition of an EMLSR link or an EMLMR link.

10. The communication control apparatus according to claim 9, wherein
the control section acquires the report information during performing the EMLSR operation or the EMLMR operation, and
when the applied change indicated by the report information is not applicable to the target link, the control section adds, as an EMLSR link or an EMLMR link, the target link indicated by the report information.

11. The communication control apparatus according to claim 2, wherein
the data type is a traffic identifier (TID).

12. The communication control apparatus according to claim 6, wherein
the field storing therein the data type is a quality of service (QoS) control field or a high. throughput (HT) control field.

13. A communication control apparatus, comprising
a control section that controls a plurality of wireless communication sections wirelessly connected to a wireless communication apparatus using respective links of a plurality of links for which respective settings have been performed,
the control section performing control such that report information is transmitted by any of the plurality of wireless communication sections, the report information indicating a change applied to a current setting of a target link such that a setting of the target link is changed from the current setting to a target setting, the target link being a portion of the plurality of links.

14. The communication control apparatus according to claim 13, wherein
the report information includes addition or exclusion of a type of data communicable using the target link.

15. The communication control apparatus according to claim 14, wherein
the report information includes a period of time for which data of the data type is communicable.

16. The communication control apparatus according to claim 14, wherein
the report information includes a communication direction in which data of the data type is communicated, and
the communication direction includes a first direction in which the data is transmitted to the wireless communication apparatus, or a second direction in which the data is received from the wireless communication apparatus.

17. The communication control apparatus according to claim 13, wherein
the control section performs control such that
the report information is stored in a header of a frame,
data is stored in a body field of the frame, and
the frame is transmitted by a wireless communication section included in the plurality of wireless communication sections.

18. The communication control apparatus according to claim 17, wherein
a first field in a frame of a confirmation response to the transmitted frame includes information indicating whether the change in setting is to be accepted,
the control section acquires the information from the first field in the confirmation response frame received by the wireless communication section, and
when the information indicates that the change in setting is to be accepted, the control section changes the setting of the target link from the current setting to the target setting on a basis of the report information.

19. The communication control apparatus according to claim 18, wherein
when the information indicates that the change in setting is not to be accepted,
the control section
acquires, from a second field in the confirmation response frame, information indicating a change to a setting different from the setting for the change indicated by the report information, and
changes the setting of the target link from the current setting to the other setting on a basis of the acquired information.

20. The communication control apparatus according to claim 13, wherein
the report information includes an identifier of a data type that is added or excluded due to the change, and an identifier of the target link.
